# EUROPÄISCHE PATENTSCHRIFT

(11) **EP 2 697 002 B1**
(45) Veröffentlichungstag und Bekanntmachung des Hinweises auf die Patenterteilung: **12.08.2015**
(21) Anmeldenummer: 12719000.7
(22) Anmeldetag: 04.05.2012
(51) Int. Cl.: B21B 37/58

(54) **STEUERVERFAHREN FÜR EINE WALZSTRASSE**
CONTROL METHOD FOR A MILL TRAIN
PROCÉDÉ DE COMMANDE POUR TRAIN DE LAMINOIR

(30) Priorität: 24.05.2011 EP 11167290
(43) Veröffentlichungstag der Anmeldung: 19.02.2014
(73) Patentinhaber: Primetals Technologies Germany GmbH, 91052 Erlangen (DE)
(72) Erfinder: DAGNER, Johannes, 91052 Erlangen (DE); GRÜSS, Ansgar, 91054 Erlangen (DE)
(74) Vertreter: Metals@Linz
(86) Internationale Anmeldenummer: PCT/EP2012/058240
(87) Internationale Veröffentlichungsnummer: WO 2012/159868

(56) Entgegenhaltungen:
- EP-A1- 2 301 685
- WO-A1-2008/043684
- DE-A1- 2 554 246
- JP-A- 61 289 908

## Beschreibung

Die vorliegende Erfindung betrifft ein Steuerverfahren für eine Walzstraße, wobei eine auf ein erstes Walzgerüst der Walzstraße wirkende Stelleinrichtung während des Walzens von Bandabschnitten unter Berücksichtigung mindestens eines Steuerparameters gesteuert wird.

Die vorliegende Erfindung betrifft weiterhin ein Computerprogramm, das Maschinencode umfasst, der von einem Steuerrechner für eine Walzstraße unmittelbar abarbeitbar ist und dessen Abarbeitung durch den Steuerrechner bewirkt, dass der Steuerrechner ein derartiges Steuerverfahren ausführt.

Die vorliegende Erfindung betrifft weiterhin einen Steuerrechner für eine Walzstraße, der derart programmiert ist, dass er im Betrieb ein derartiges Steuerverfahren ausführt.

Die vorliegende Erfindung betrifft weiterhin eine Walzstraße zum Walzen eines Bandes, die zumindest ein erstes Walzgerüst umfasst und mit einem derartigen Steuerrechner ausgestattet ist.

Temperaturschwankungen über die Breite und die Länge des Bandes können zu erheblichen Störungen im Walzbetrieb führen. Durch die sich ändernde Materialhärte kommt es zu Variationen in der Walzkraft, die wiederum zu anderen Gerüstreaktionen führen kann, die ihrerseits eine Veränderung des Walzspaltprofils zur Folge haben. Beispiele derartiger Gerüstreaktionen sind die Walzenabplattung, die Walzendurchbiegung und die Gerüstauffederung. Hinzu kommt eine Änderung der Walzenbombierung durch den Kontakt der Arbeitswalzen mit dem unterschiedlich warmen Band. Auch dies hat Einfluss auf die Geometrie des Walzspaltes. Werden derartige Veränderungen des Walzspaltprofils nicht berücksichtigt, sind Dicken-, Profil-und Planheitsfehler die Folge.

Die bekannte Sollwertberechnung von Walzstraßen (Stichplanberechnung) kann Temperaturveränderungen in Längsrichtung nur eingeschränkt (Kopf-, Band- und Fußtemperatur) und in Richtung der Bandbreite gar nicht erfassen. Bisher werden derartige Effekte zum Teil mittels automatischer Walzspaltregelungen (AGC = automatic gauge control) kompensiert, welche die Abweichungen der Anstellung durch die Gerüstreaktion zumindest teilweise ausregelt. Weiterhin sind Techniken bekannt, in denen eine Walzkraftmessung im ersten Walzgerüst einer mehrgerüstigen Walzstraße verwendet wird, um die restlichen Walzgerüste vorzusteuern.

Beide Vorgehensweisen sind mit Nachteilen behaftet. So kann die Walzspaltregelung (AGC) nicht auf Schwankungen im Temperaturprofil über die Bandbreite reagieren. Vor allem eine Asymmetrie in der Materialfestigkeit (beispielsweise verursacht durch einen Temperaturkeil) und damit verbunden eine Asymmetrie in der Gerüstreaktion wird nicht berücksichtigt. Weiterhin ist eine Variation der Walzenbombierung nicht oder nur mit Verzögerung erfassbar. Die Vorsteuerung der Walzgerüste einer mehrgerüstigen Walzstraße mittels der Walzkraftmessung im ersten Walzgerüst der Walzstraße ist bei einer eingerüstigen Straße prinzipbedingt nicht anwendbar.

Ein weiterer Nachteil beider bekannter Techniken besteht darin, dass sie die gezielte Walzenkühlung zur Anpassung der Walzenbombierung nicht nutzen können. Die gezielte Anpassung der Walzenbombierung ist insbesondere dann hilfreich, wenn die anderen Stellglieder zur Beeinflussung der Walzspaltform (beispielsweise die Walzenrückbiegung und die Walzenverschiebung) an ihre Stellgrenzen gelangen, beispielsweise bei einem Walzkraftanstieg durch einen lokalen Temperatureinbruch.

In besonderem Ausmaß tritt dieses Problem bei kombinierten Gießwalzanlagen zutage, bei denen keine oder nur begrenzte Ausgleichsmöglichkeiten für Temperaturschwankungen im Band bestehen, so dass Temperaturprofile (über die Länge und/oder die Bandbreite) sich bis zum Erreichen des Walzgerüsts bzw. der Walzgerüste nicht ausgeglichen haben. Auch bei Warmbreitbandstraße kann es zu Variationen in der Temperatur kommen, beispielsweise durch die so genannten Skidmarks oder eine ungleichmäßige Durchwärmung der Bramme im Ofen.

Aus der DE 101 56 008 Al und der inhaltsgleichen US 2004/205 951 Al ist ein Steuerverfahren für eine Walzstraße bekannt,
- wobei für Bandabschnitte eines Bandes vor dem ersten Walzgerüst jeweils eine Temperatur ermittelt wird, welche die Bandabschnitte aufweisen,
- wobei mittels eines Bandmodells die Temperaturen der Bandabschnitte für den Zeitpunkt des Walzens des jeweiligen Bandabschnitts in dem ersten Walzgerüst in Echtzeit mitgerechnet werden.

Bei der DE 101 56 008 Al erfolgt eine reine Ermittlung des Temperaturverhaltens und ggf. auch der Phasenumwandlung der Bandabschnitte mit dem Ziel, eine Bandheizung und/oder eine Bandkühlung geeignet einstellen zu können. Eine Verwertung der ermittelten Temperatur im Rahmen des Walzprozesses als solchem ist bei der DE 101 56 008 A1 nicht vorgesehen.

Aus der WO 2008/043 684 Al ist ein Steuerverfahren für eine Walzstraße bekannt,
- wobei für Bandabschnitte eines Bandes vor einem ersten Walzgerüst der Walzstraße jeweils eine Temperatur ermittelt wird, welche die Bandabschnitte aufweisen,
- wobei mittels eines Bandmodells anhand der ermittelten Termperaturen die Temperaturen der Bandabschnitte für den Zeitpunkt des Walzens des jeweiligen Bandabschnitts in dem ersten Walzgerüst prognostiziert werden,
- wobei unter Verwendung der prognostizierten Temperaturen der Bandabschnitte mindestens ein jeweiliger Steuerparameter für das Walzen der Bandabschnitte in dem ersten Walzgerüst ermittelt wird,
- wobei eine auf das erste Walzgerüst wirkende Stelleinrichtung während des Walzens des jeweiligen Bandabschnitts unter Berücksichtigung des jeweiligen ermittelten Steuerparameters gesteuert wird.

Aus der EP 2 301 685 Al ist ein Steuerverfahren für eine Walzstraße bekannt, bei dem für Bandabschnitte eines Bandes vor einem ersten Walzgerüst der Walzstraße jeweils eine Temperatur ermittelt wird, welche die Bandabschnitte aufweisen. Mittels eines Bandmodells werden anhand der ermittelten Temperaturen die Temperaturen der Bandabschnitte mit einem Prognosehorizont prognostiziert, der mit mehreren Bandabschnitten korrespondiert.

Die Aufgabe der vorliegenden Erfindung besteht darin, Möglichkeiten zu schaffen, mittels derer der Temperaturverlauf des Bandes beim Walzen des Bandes auf besonders vorteilhafte Weise berücksichtigt werden kann. Insbesondere soll der Temperaturverlauf des Bandes bei der Profileinstellung des Walzspalts berücksichtigt werden können.

Die Aufgabe wird durch ein Steuerverfahren mit den Merkmalen des Anspruchs 1 gelöst. Vorteilhafte Ausgestaltungen des erfindungsgemäßen Steuerverfahrens sind Gegenstand der abhängigen Ansprüche 2 bis 11.

Erfindungsgemäß ist bei einem Steuerverfahren für eine Walzstraße vorgesehen,
- dass die Temperaturen der Bandabschnitte für den Zeitpunkt des Walzens des jeweiligen Bandabschnitts in dem ersten Walzgerüst mittels des Bandmodells mit einem ersten Prognosehorizont prognostiziert werden,
- dass der erste Prognosehorizont mit mehreren in dem ersten Walzgerüst zu walzenden Bandabschnitten korrespondiert,
- dass für den ersten Prognosehorizont ein Stellgrößenverlauf für die Stelleinrichtung angesetzt wird,
- dass mittels des Stellgrößenverlaufs ein Profil eines von Arbeitswalzen des ersten Walzgerüsts gebildeten Walzspalts beeinflusst wird,
- dass mittels eines Walzgerüstmodells für das erste Walzgerüst unter Verwendung der prognostizierten Temperaturen der Bandabschnitte und des angesetzten Stellgrößenverlaufs für die mit dem ersten Prognosehorizont korrespondierenden Bandabschnitte ein jeweiliges Walzspaltprofil prognostiziert wird, das die Arbeitswalzen des ersten Walzgerüsts zum Zeitpunkt des Walzens des jeweiligen Bandabschnitts bilden,
- dass der angesetzte Stellgrößenverlauf anhand des für die Bandabschnitte prognostizierten Walzspaltprofils und eines jeweiligen Sollprofils optimiert wird und
- dass der aktuelle Wert des optimierten Stellgrößenverlaufs dem Steuerparameter entspricht und der Stelleinrichtung als Stellgröße vorgegeben wird.

Die letztgenannte Vorgehensweise kann dadurch noch weiter verbessert werden,
- dass einem Walzkraftmodell zumindest die prognostizierten Temperaturen zugeführt werden,
- dass mittels des Walzkraftmodells unter Verwendung der prognostizierten Temperaturen für die mit dem ersten Prognosehorizont korrespondierenden Bandabschnitte die zum Walzen des jeweiligen Bandabschnitts in dem ersten Walzgerüst jeweils erforderliche Walzkraft prognostiziert wird und
- dass die Walzspaltprofile mittels des Walzgerüstmodells unter Verwendung der prognostizierten Walzkräfte prognostiziert werden.

Die Stelleinrichtung für die Beeinflussung des Walzspaltprofils kann nach Bedarf ausgebildet sein. Insbesondere kommen eine Walzenrückbiegung und/oder eine Walzenverschiebung in Frage. Vorzugsweise umfasst die Stelleinrichtung eine Walzenkühleinrichtung. Die Walzenkühleinrichtung kann insbesondere in Bandbreitenrichtung ortsaufgelöst ansteuerbar sein.

Es ist möglich, dass das Steuerverfahren mit einem zweiten Prognosehorizont auch für ein zweites, dem ersten Walzgerüst nachgeordnetes Walzgerüst der Walzstraße ausgeführt wird. In diesem Fall werden die Bandabschnitte in dem ersten Walzgerüst von einer ersten Einlaufdicke auf eine erste Auslaufdicke und in dem zweiten Walzgerüst von einer zweiten Einlaufdicke auf eine zweite Auslaufdicke gewalzt.

Es ist möglich, dass die erste Auslaufdicke und/oder die zweite Einlaufdicke bandabschnittspezifisch bestimmt sind. Durch diese Vorgehensweise kann insbesondere im laufenden Walzbetrieb eine Lastumverteilung zwischen dem ersten und dem zweiten Walzgerüst erfolgen.

Der Prognosehorizont für das zweite Walzgerüst kann nach Bedarf bestimmt sein, er muss jedoch - analog zum Prognosehorizont für das erste Walzgerüst - derart bemessen sein, dass er mit mehreren Bandabschnitten korrespondiert, dass also während des Prognosehorizonts für das zweite Walzgerüst in dem zweiten Walzgerüst mehrere Bandabschnitte gewalzt werden. Vorzugsweise ist der zweite Prognosehorizont derart bemessen, dass während des zweiten Prognosehorizonts mehrere Bandabschnitte sowohl in dem ersten als auch in dem zweiten Walzgerüst gewalzt werden. Insbesondere können die Prognosehorizonte für das erste und das zweite Walzgerüst derart bemessen werden, dass die Differenz der Prognosehorizonte der Zeit entspricht, die ein Bandabschnitt benötigt, um vom ersten Walzgerüst zum zweiten Walzgerüst zu gelangen. Die Prognosehorizonte können sozusagen an der gleichen, vor dem ersten Walzgerüst angeordneten Stelle aufsetzen.

In manchen Fällen kann die Verformbarkeit des Bandes - beispielsweise aufgrund von Temperatur- und/oder Verfestigungsunterschieden - auch über die Breite des Bandes variieren. In einem derartigen Fall ist vorzugsweise vorgesehen,
- dass für die Bandabschnitte unter Verwendung der prognostizierten Temperaturen für den Zeitpunkt des Walzens des jeweiligen Bandabschnitts in dem ersten Walzgerüst ein jeweiliger aktueller bedienseitiger und ein jeweiliger aktueller antriebsseitiger Materialmodul prognostiziert werden,
- dass mittels der Stelleinrichtung bedienseitig und antriebsseitig ein Walzspalt des ersten Walzgerüsts beeinflussbar ist und
- dass die Materialmodule den Steuerparametern entsprechen und zum Zeitpunkt des Walzens des jeweiligen Bandabschnitts in dem ersten Walzgerüst für die Parametrierung einer bedienseitigen und einer antriebsseitigen Walzspaltsteuerung herangezogen werden.

Die erfindungsgemäßen Vorgehensweisen können dadurch noch weiter verbessert werden,
- dass das Bandmodell ein Materialmodell umfasst, mittels dessen für die in dem ersten Walzgerüst zu walzenden Bandabschnitte für den Zeitpunkt des Walzens des jeweiligen Bandabschnitts in dem ersten Walzgerüst jeweils eine zu erwartende, von der Temperatur verschiedene Materialeigenschaft prognostiziert wird und
- dass die prognostizierten Materialeigenschaften bei der Ermittlung des mindestens einen Steuerparameters berücksichtigt werden.

In manchen Fällen kann es ausreichen, die Temperaturen für die Bandabschnitte als skalare Größen zu prognostizieren. Oftmals ist es jedoch von Vorteil, wenn die mittels des Bandmodells prognostizierten Temperaturen der Bandabschnitte in Bandbreitenrichtung ortsaufgelöst sind. Vorzugsweise sind in diesem Fall bereits die für die Bandabschnitte ermittelten Temperaturen in Bandbreitenrichtung ortsaufgelöst.

Modelle für Anlagen der Grundstoffindustrie sind aufgrund der Komplexität der zu modellierenden Vorgänge in Verbindung mit der nur begrenzt möglichen Datenerfassung üblicherweise fehlerbehaftet. Um derartige Fehler in Echtzeit korrigieren zu können, ist vorzugsweise vorgesehen,
- dass das Bandmodell und/oder ein anderes, im Rahmen der Ermittlung des mindestens einen Steuerparameters verwendetes Modell mittels eines Modellparameters parametrierbar ist,
- dass zusätzlich zu im Rahmen der Ermittlung des mindestens einen Steuerparameters unter Verwendung des parametrierbaren Modells ermittelten Größen in Echtzeit funktionale Abhängigkeiten der ermittelten Größen von dem Modellparameter ermittelt werden,
- dass für die Bandabschnitte in Echtzeit unter Verwendung der mittels des parametrierbaren Modells ermittelten Größen ein Erwartungswert für einen Messwert und eine funktionale Abhängigkeit des Erwartungswertes von dem Modellparameter ermittelt werden,
- dass für die Bandabschnitte mittels einer vor, an oder hinter dem ersten Walzgerüst angeordneten Messeinrichtung in Echtzeit jeweils der entsprechende Messwert erfasst wird,
- dass anhand des Messwerts, des Erwartungswertes und der funktionalen Abhängigkeit des Erwartungswertes von dem Modellparameter der Modellparameter neu bestimmt wird,
- dass das parametrierbare Modell anhand des neu bestimmten Modellparameters neu parametriert wird und
- dass die für die Bandabschnitte im Rahmen der Ermittlung des mindestens einen Steuerparameters unter Verwendung des parametrierbaren Modells bereits ermittelten Größen in Echtzeit nachgeführt werden.

Dadurch wird insbesondere erreicht, dass das fehlerbehaftete Modell im laufenden Betrieb, also während des Walzens der Bandabschnitte, adaptiert werden kann.

Die Aufgabe wird weiterhin durch ein Computerprogramm mit den Merkmalen des Anspruchs 12 gelöst. Erfindungsgemäß bewirkt die Abarbeitung des Maschinencodes durch den Steuerrechner, dass der Steuerrechner ein erfindungsgemäßes Steuerverfahren ausführt.

Die Aufgabe wird weiterhin durch einen Steuerrechner mit den Merkmalen des Anspruchs 13 gelöst. Erfindungsgemäß ist der Steuerrechner derart programmiert, dass er im Betrieb ein erfindungsgemäßes Steuerverfahren ausführt.

Die Aufgabe wird weiterhin durch eine Walzstraße mit den Merkmalen des Anspruchs 14 gelöst. Erfindungsgemäß ist eine Walzstraße zum Walzen eines Bandes, die zumindest ein erstes Walzgerüst umfasst, mit einem erfindungsgemäß programmierten Steuerrechner ausgestattet.

Weitere Vorteile und Einzelheiten ergeben sich aus der nachfolgenden Beschreibung von Ausführungsbeispielen in Verbindung mit den Zeichnungen. Es zeigen in schematischer Prinzipdarstellung:
- FIG 1: eine Walzstraße,
- FIG 2 und 3: Ablaufdiagramme,
- FIG 4: ein erstes Walzgerüst,
- FIG 5: ein Blockschaltbild,
- FIG 6: ein Ablaufdiagramm,
- FIG 7: ein Blockschaltbild,
- FIG 8: ein Ablaufdiagramm,
- FIG 9: ein Blockschaltbild,
- FIG 10: ein Ablaufdiagramm,
- FIG 11: ein Blockschaltbild,
- FIG 12: ein Ablaufdiagramm,
- FIG 13: ein Blockschaltbild,
- FIG 14 und 15: jeweils einen Bandabschnitt zu verschiedenen Zeitpunkten,
- FIG 16: eine mehrgerüstige Walzstraße,
- FIG 17: einen Ein- und einen Auslaufdickenverlauf,
- FIG 18: ein Ablaufdiagramm und
- FIG 19: eine mehrgerüstige Walzstraße.

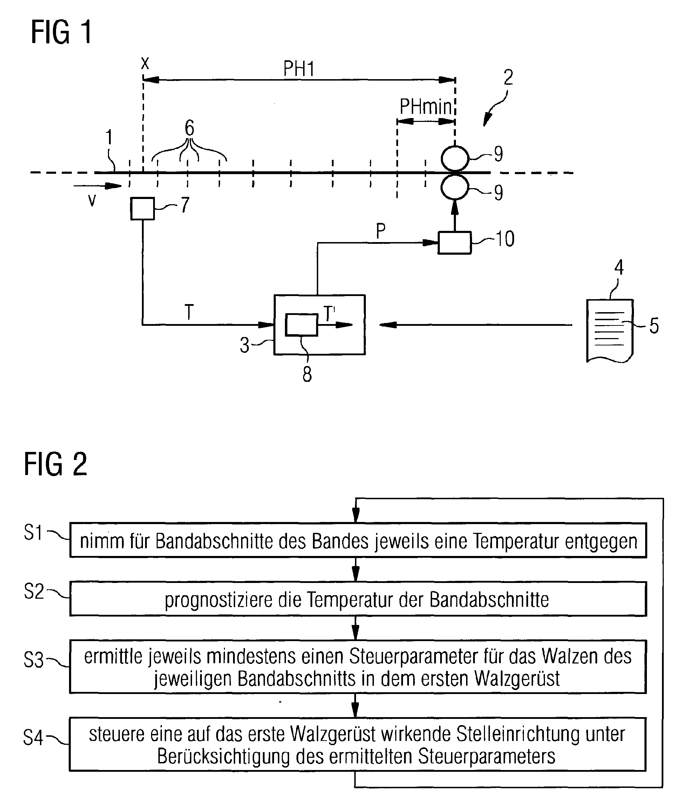

Gemäß FIG 1 weist eine Walzstraße zum Walzen eines Bandes 1 ein erstes Walzgerüst 2 auf. Das erste Walzgerüst 2 kann das einzige Walzgerüst der Walzstraße sein. Alternativ können weitere Walzgerüste vorhanden sein. Das Band 1 ist in der Regel ein Metallband, beispielsweise ein Stahl-, Aluminium-, Magnesium- oder Kupferband. Auch andere Metalle und Metalllegierungen kommen in Frage.

Die Walzstraße und damit auch das erste Walzgerüst 2 werden von einem Steuerrechner 3 gesteuert. Der Steuerrechner 3 ist mit einem Computerprogramm 4 programmiert. Das Computerprogramm 4 umfasst Maschinencode 5, der von dem Steuerrechner 3 unmittelbar abarbeitbar ist. Das Abarbeiten des Maschinencodes 5 durch den Steuerrechner 3 - also der Betrieb des Steuerrechners 3 - bewirkt, dass der Steuerrechner 3 mindestens eines - ggf. auch mehrere - der Steuerverfahren ausführt, die nachfolgend in Verbindung mit den FIG 2 bis 19 näher erläutert werden.

Gemäß FIG 2 nimmt der Steuerrechner 3 in einem Schritt S1 für Bandabschnitte 6 des Bandes 1 jeweils eine Temperatur T entgegen. Es ist möglich (und sogar üblich), dass die Temperaturen T der Bandabschnitte 6 gemäß FIG 1 mittels einer Temperaturmesseinrichtung 7 messtechnisch erfasst werden. Alternativ kann eine anderweitige Ermittlung - insbesondere Berechnung - erfolgen.

Unabhängig davon, auf welche Weise die Temperaturen T der Bandabschnitte 6 ermittelt werden, erfolgt die Ermittlung des Schrittes S1 jedoch für einen Ort x, der sich vor dem ersten Walzgerüst 2 befindet. Die Temperatur T ist also für die jeweilige Temperatur T des jeweiligen Bandabschnitts 6 zu einem Zeitpunkt charakteristisch, zu dem sich der entsprechende Bandabschnitt 6 noch vor dem ersten Walzgerüst 2 befindet.

Der Steuerrechner 3 implementiert aufgrund der Programmierung mit dem Computerprogramm 4 unter anderem ein Bandmodell 8. Das Bandmodell 8 modelliert mittels mathematisch-physikalischer Gleichungen zumindest das Temperaturverhalten des Bandes 1. Insbesondere wird mittels des Bandmodells 8 für die Bandabschnitte 6 eine Wärmeleitungsgleichung gelöst. Im Rahmen des Lösens der Wärmeleitungsgleichung werden insbesondere die interne Wärmeleitung innerhalb des Bandes 1 als auch die Wechselwirkung des Bandes 1 mit seiner Umgebung berücksichtigt, beispielsweise die Wechselwirkung mit Kühl- und Heizeinrichtungen, einem Zunderwäscher, dem Kontakt mit Transportrollen, dem Kontakt mit Arbeitswalzen 9 des ersten Walzgerüsts 2 usw.. Weiterhin kann, falls dies erforderlich ist, gekoppelt mit der Wärmeleitungsgleichung auch eine Phasenumwandlungsgleichung gelöst werden. Die entsprechenden Vorgehensweisen sind Fachleuten allgemein bekannt. Eine vorteilhafte Wärmeleitungsgleichung ist beispielsweise in der DE 101 29 565 Al bzw. der inhaltsgleichen US 6 860 950 B2 beschrieben. Eine vorteilhafte Phasenumwandlungsgleichung ist beispielsweise in der EP 1 711 868 B1 bzw. der inhaltsgleichen US 7 865 341 B2 beschrieben. Gegebenenfalls können im Bandmodell 8 weitere Modelle enthalten sein.

Mittels des Bandmodells 8 prognostiziert der Steuerrechner 3 in einem Schritt S2 somit anhand der ermittelten Temperaturen T die Temperatur der Bandabschnitte 6 für den Zeitpunkt des Walzens des jeweiligen Bandabschnitts 6 in dem ersten Walzgerüst 2. Die prognostizierte Temperatur ist zur Unterscheidung von der ermittelten Temperatur T mit dem Bezugszeichen T' versehen.

Die Prognose erfolgt mit einem Prognosehorizont PH1, nachfolgend als erster Prognosehorizont PH1 bezeichnet. Der erste Prognosehorizont PH1 entspricht der Anzahl von Zeitschritten, um die das Bandmodell 8 die Temperatur T' prognostiziert, wobei während jedes Zeitschrittes jeweils ein Bandabschnitt 6 im ersten Walzgerüst 2 gewalzt wird.

Minimal umfasst der erste Prognosehorizont PH1 einen einzigen Zeitschritt. Ein minimaler Prognosehorizont PHmin ist somit dadurch bestimmt, dass die Prognostizierung der Temperatur der Bandabschnitte 6 um einen einzigen Zeitschritt voreilt. In diesem Fall wird also während des ersten Prognosehorizontes PH1 in dem ersten Walzgerüst 2 ein einziger Bandabschnitt 6 gewalzt, nämlich der unmittelbar vorhergehende Bandabschnitt 6. In manchen Ausgestaltungen der vorliegenden Erfindung - dies wird später näher erläutert werden - ist der erste Prognosehorizont PH1 jedoch derart bemessen, dass während des ersten Prognosehorizonts PH1 in dem ersten Walzgerüst 2 mehrere Bandabschnitte 6 gewalzt werden, beispielsweise fünf, acht, zehn oder noch mehr Bandabschnitte 6.

In einem Schritt S3 ermittelt der Steuerrechner 3 unter Verwendung der prognostizierten Temperaturen T' der Bandabschnitte 6 jeweils mindestens einen Steuerparameter P für das Walzen des jeweiligen Bandabschnitts 6 in dem ersten Walzgerüst 2. In einem Schritt S4 steuert der Steuerrechner 3 eine Stelleinrichtung 10. Die Stelleinrichtung 10 wirkt auf das erste Walzgerüst 2. Die Steuerung der Stelleinrichtung 10 erfolgt während des Walzens des jeweiligen Bandabschnitts 6 unter Berücksichtigung des für den momentan zu walzenden Bandabschnitt 6 ermittelten Steuerparameters P.

Die Vorgehensweise von FIG 2 wird nachfolgend anhand eines Beispiels nochmals erläutert.

Man nehme an, zu einem bestimmten Zeitpunkt wird für einen bestimmten Bandabschnitt 6 eine bestimmte Temperatur T ermittelt, beispielsweise messtechnisch erfasst (Schritt S1). Der entsprechende Bandabschnitt 6 wird während seines Transports durch die Walzstraße wegverfolgt. Die Temperatur T', die für den entsprechenden Bandabschnitt 6 erwartet wird, wird kontinuierlich mitgerechnet (Schritt S2), wobei die modellgestützte Temperaturprognose dem Ort des entsprechenden Bandabschnitts 6 mindestens einen Zeitschritt voraus ist. Zu dem Zeitpunkt, zu dem sich der betrachtete Bandabschnitt 6 unmittelbar vor dem ersten Walzgerüst 2 befindet - im ersten Walzgerüst 2 also der unmittelbar vorhergehende Bandabschnitt 6 gewalzt wird -, wird der Steuerparameter P für den betrachteten Bandabschnitt 6 ermittelt. Der Steuerparameter P ist dem Steuerrechner 3 daher rechtzeitig bekannt, so dass der Steuerrechner 3 den Steuerparameter P bei der Steuerung der Stelleinrichtung 10 berücksichtigen kann, wenn der betrachtete Bandabschnitt 6 im ersten Walzgerüst 2 gewalzt wird. In die Ermittlung des Steuerparameters P gehen alternativ die prognostizierte Temperatur T' des unmittelbar vor dem ersten Walzgerüst 2 befindlichen Bandabschnitts 6 oder - falls der erste Prognosehorizont PH1 größer als der minimale Prognosehorizont PHmin ist - zusätzlich die prognostizierten Temperaturen T' weiterer Bandabschnitte 6 ein.

Die Vorgehensweise von FIG 2 wird in der Regel getaktet ausgeführt, beispielsweise mit einem Zeittakt zwischen 0,1 Sekunde und 0,5 Sekunden, in der Regel ca. 0,2 Sekunden bis 0,3 Sekunden. Mit jedem Zeittakt wird für einen neuen Bandabschnitt 6 die Temperatur T ermittelt und so dem Steuerrechner 3 bekannt. Die Temperaturprognose erfolgt sodann modellgestützt.

Für manche Ausgestaltungen der vorliegenden Erfindung benötigt der Steuerrechner 3 auch die prognostizierten Temperaturen T' und evtl. auch sonstige Eigenschaften anderer Bandabschnitte 6 und/oder prognostizierte Eigenschaften des ersten Walzgerüsts 2. Soweit es sich um nach dem betrachteten Bandabschnitt 6 zu walzende Bandabschnitte 6 handelt, sind deren Temperaturen und Eigenschaften dem Steuerrechner 3 bekannt, wenn sie innerhalb des ersten Prognosehorizonts PH1 liegen. Beispielsweise sind dem Steuerrechner 3 bei einem ersten Prognosehorizont PH1 von acht Bandabschnitten 6 zu dem Zeitpunkt, zu dem für einen bestimmten Bandabschnitt 6 dessen Temperatur T ermittelt wird, aufgrund der bereits zuvor durchgeführten Prognose die erwarteten Temperaturen T' der sieben nachfolgenden Bandabschnitte 6 bereits bekannt. Anders ausgedrückt: Bei einem ersten Prognosehorizont PH1 von acht Bandabschnitten 6 sind zu jedem Zeitpunkt die prognostizierten Temperaturen T' der acht vor dem ersten Walzgerüst 2 befindlichen Bandabschnitte 6 bekannt. Sie können daher für die Ermittlung des Steuerparameters P für den Bandabschnitt 6, der im ersten Walzgerüst 2 als nächstes gewalzt wird, berücksichtigt werden. Soweit es sich um vor dem betrachteten Bandabschnitt 6 zu walzende Bandabschnitte 6 handelt, sind deren Temperaturen und Eigenschaften dem Steuerrechner 3 aus der Vergangenheit bekannt.

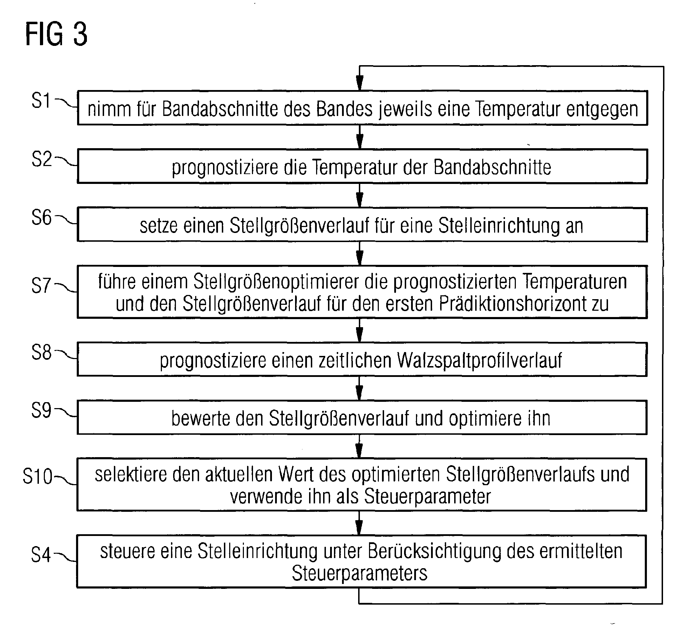

In Verbindung mit FIG 3 wird nachfolgend eine mögliche Ausgestaltung des erfindungsgemäßen Steuerverfahrens näher erläutert, bei welcher der erste Prognosehorizont PH1 derart bemessen ist, dass in dem ersten Walzgerüst 2 während des ersten Prognosehorizonts PH1 mehrere Bandabschnitte 6 gewalzt werden. Rein beispielhaft wird in diesem Zusammenhang angenommen, dass der erste Prognosehorizont PH1 acht Bandabschnitten 6 entspricht. Diese Dimensionierung dient jedoch nur der Veranschaulichung, ist also nicht einschränkend auf zwangsweise acht Bandabschnitte 6 zu verstehen.

Gemäß FIG 3 sind - wie bei FIG 2 auch - die Schritte S1, S2 und S4 vorhanden. Zu den Schritten S1 und S4 sind keine weitergehenden Erläuterungen erforderlich. Zum Schritt S2 ist lediglich zu erwähnen, dass im Rahmen des Schrittes S2 von FIG 3 der Schritt S2 mit dem ersten Prognosehorizont PH1 von mehreren - rein beispielhaft acht - Bandabschnitten 6 ausgeführt wird. Im Rahmen des Schrittes S2 von FIG 3 werden die entsprechenden Temperaturen T' also für alle Bandabschnitte 6 prognostiziert, die sich zu dem betrachteten Zeitpunkt bis zu acht Bandabschnitte 6 vor dem ersten Walzgerüst 2 befinden.

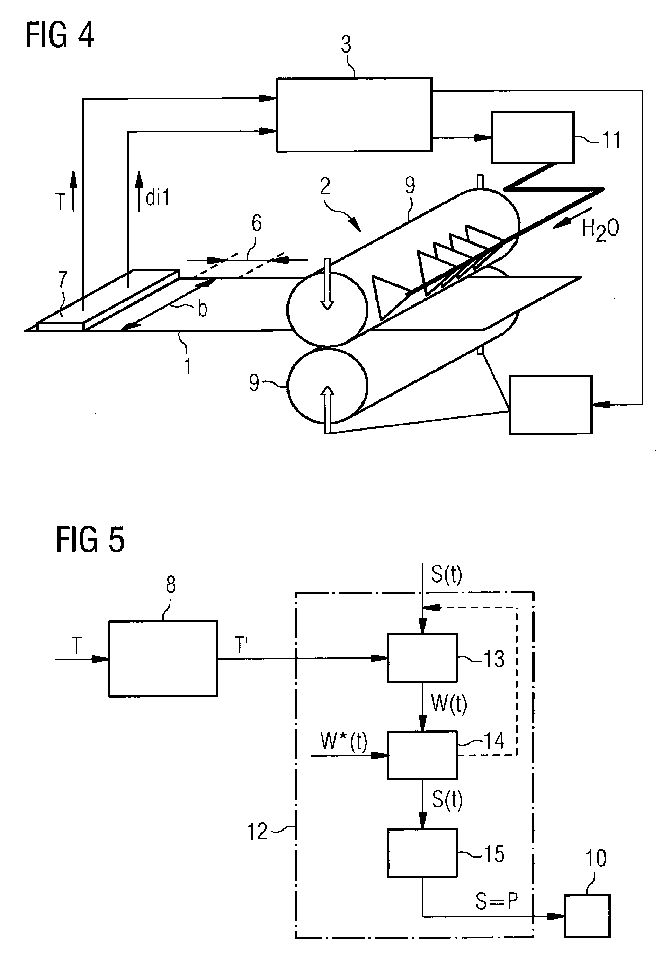

Der Schritt S3 von FIG 2 ist in FIG 3 durch Schritte S6 bis S10 implementiert. Insbesondere ist im Rahmen der Ausgestaltung von FIG 3 angenommen, dass die Stelleinrichtung 10 derart ausgebildet ist, dass mit ihr das Profil des Walzspalts - also der Abstand der Arbeitswalzen 9 des ersten Walzgerüsts 2 voneinander über die Breite gesehen - eingestellt werden kann. Beispielsweise kann die Stelleinrichtung 10 zu diesem Zweck als Walzenschiebeeinrichtung und/oder als Walzenrückbiegeeinrichtung ausgebildet sein. Gemäß FIG 4 kann die Stelleinrichtung 10 - eventuell alleinig, alternativ zusätzlich zu einer Walzenschiebe- und/oder Walzenrückbiegeeinrichtung - eine Walzenkühleinrichtung 11 umfassen. Die Walzenkühleinrichtung 11 kann entsprechend der Darstellung in FIG 4 insbesondere in Bandbreitenrichtung ortsaufgelöst ansteuerbar sein.

Im Schritt S6 wird gemäß FIG 3 ein Stellgrößenverlauf S(t) für die Stelleinrichtung 10 angesetzt. Es wird also der zeitliche Verlauf der Stellgröße S angesetzt. Der Stellgrößenverlauf S(t) wird für den ersten Prognosehorizont PH1 - also den betrachteten Bandabschnitt 6 und die sieben dem betrachteten Bandabschnitt 6 nachfolgenden Bandabschnitte 6 - angesetzt. Mittels des Stellgrößenverlaufs S(t) wird - entsprechend der Natur der Stelleinrichtung 10 - das Profil des Walzspalts beeinflusst. Insbesondere kann beispielsweise durch die Walzenkühleinrichtung 11 die thermische Balligkeit der Arbeitswalzen 9 eingestellt werden.

Einem Stellgrößenoptimierer 12 - siehe FIG 5 - werden im Schritt S7 zugeführt
- die prognostizierten Temperaturen T', welche die im ersten Prognosehorizont PH1 liegenden Bandabschnitte 6 zum Zeitpunkt des Walzens des jeweiligen Bandabschnitts 6 im ersten Walzgerüst 2 aufweisen und
- der Stellgrößenverlauf S(t) für den ersten Prognosehorizont PH1.

Der Stellgrößenoptimierer 12 ist ein von dem Steuerrechner 3 implementierter Softwareblock. Er umfasst unter anderem ein Walzgerüstmodell 13. Das Walzgerüstmodell 13 modelliert insbesondere die thermische Balligkeit der Arbeitswalzen 9 und den Verschleiß der Arbeitswalzen 9, der sich durch den Kontakt der Arbeitswalzen 9 mit dem Band 1 ergibt. Das Walzgerüstmodell 13 modelliert weiterhin den Einfluss des Stellgrößenverlaufs S(t) auf den Walzspalt, beispielsweise den Einfluss der Walzenkühleinrichtung 11 auf die thermische Balligkeit.

Das Walzgerüstmodell 13 prognostiziert im Schritt S8 als Ausgangsgröße einen zeitlichen Walzspaltprofilverlauf W(t). Das Walzgerüstmodell 13 ermittelt also im Schritt S8 für jeden innerhalb des ersten Prognosehorizontes PH1 liegenden Bandabschnitt 6 das Walzspaltprofil W, dass sich für den jeweiligen Bandabschnitt 6 ergibt. Das Walzgerüstmodell 13 ermittelt den Walzspaltprofilverlauf W(t) unter Verwendung des ihm zugeführten Stellgrößenverlaufs S(t) und der prognostizierten Temperaturen T' der Bandabschnitte 6.

Der Walzspaltprofilverlauf W(t) wird gemäß den FIG 3 und 5 in einem Bewerter 14 bewertet und von dem Bewerter 14 im Schritt S9 optimiert. Gegebenenfalls kann, falls dies für die Optimierung erforderlich ist, nach einem Modifizieren des angesetzten Stellgrößenverlaufs S(t) ein erneuter Aufruf des Walzgerüstmodells 13 erfolgen. Dies ist in der FIG 5 gestrichelt angedeutet.

Zum Optimieren des Stellgrößenverlaufs S(t) wird der ermittelte Walzspaltprofilverlauf W(t) mit einem Sollprofilverlauf W* (t) verglichen. Der Sollprofilverlauf W* (t) kann konstant sein. Unabhängig davon, ob der Sollprofilverlauf W* (t) konstant ist oder nicht, ist das vorrangige Ziel der Optimierung, die Planheit des Bandes 1 zu gewährleisten. Nachrangig sollte nach Möglichkeit ein möglichst gleichmäßiges Profil gewalzt werden.

Vorzugsweise ist die Temperaturerfassung gemäß FIG 4 mit einer Banddickenerfassung und/oder einer Bandprofilerfassung gekoppelt. In diesem Fall kann in einem Profil- und Planheitsmodell anhand der erfassten Banddicke bzw. des erfassten Banddickenprofils das Sollprofil W* für den jeweiligen Bandabschnitt 6 ermittelt werden.

Der optimierte Stellgrößenverlauf S(t) wird gemäß FIG 5 einem Selektor 15 zugeführt. Der Selektor 15 selektiert im Schritt S10 den aktuellen Wert des optimierten Stellgrößenverlaufs S(t), also den Wert des optimierten Stellgrößenverlaufs S(t), der für den als nächstes zu walzenden Bandabschnitt 6 ermittelt wurde. Dieser Wert S entspricht dem Steuerparameter P des Schrittes S4 und wird der Stelleinrichtung 10 im Schritt S4 von FIG 3 als Stellgröße vorgegeben.

Es ist möglich, dass der Stellgrößenoptimierer 12 den im Rahmen von FIG 3 ermittelten optimierten Stellgrößenverlauf S(t) "vergisst". Vorzugsweise "merkt" sich der Stellgrößenoptimierer 12 den optimierten Stellgrößenverlauf S(t) jedoch und verwendet ihn beim nächsten Arbeitstakt, wenn also der nächste Bandabschnitt 6 behandelt wird, für die übereinstimmenden Bandabschnitte 6 als angesetzten Stellgrößenverlauf S(t).

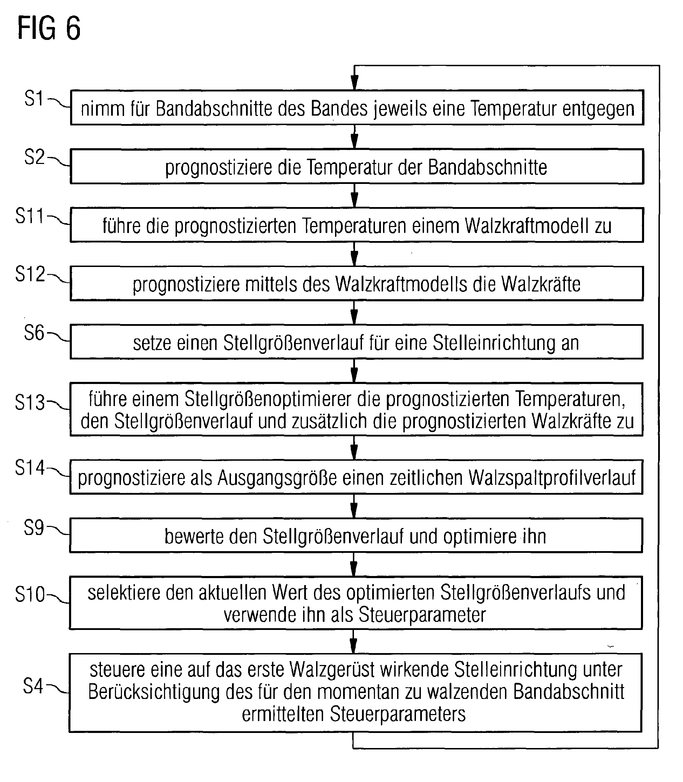

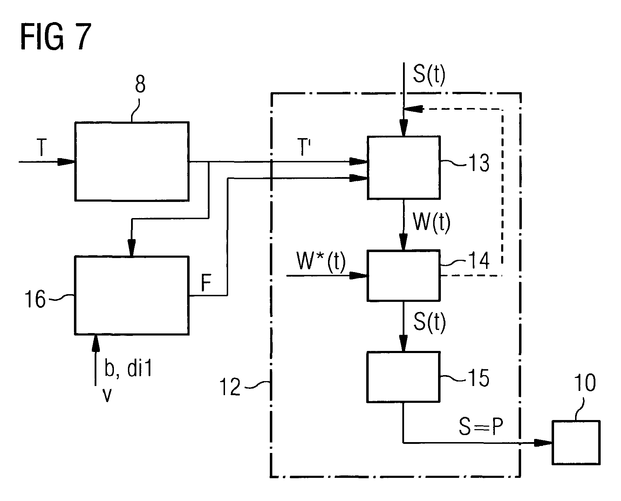

Die obenstehend in Verbindung mit den FIG 3 bis 5 erläuterte Vorgehensweise kann durch eine Ausgestaltung, wie sie nachfolgend in Verbindung mit den FIG 6 und 7 erläutert wird, weiter verbessert werden.

FIG 6 ist eine Modifikation von FIG 3, FIG 7 eine Modifikation von FIG 5. Nachfolgend wird daher nur auf die Unterschiede zu diesen FIG näher eingegangen.

Gemäß FIG 6 sind im Vergleich zu FIG 3 zusätzlich Schritte S11 und S12 vorhanden. Im Schritt S11 werden die vom Bandmodell 8 prognostizierten Temperaturen T' einem Walzkraftmodell 16 zugeführt. Mittels des Walzkraftmodells 16 werden im Schritt S12 unter Verwendung der prognostizierten Temperaturen T' für die betreffenden Bandabschnitte 6 die Walzkräfte F prognostiziert. Das Walzkraftmodell 16 ermittelt also für jeden innerhalb des ersten Prognosehorizonts PH1 zu walzenden Bandabschnitt 6, welche Walzkraft F erforderlich ist, um den entsprechenden Bandabschnitt 6 von einer ersten Einlaufdicke di1 auf eine gewünschte erste Auslaufdicke do1 zu walzen. Die hierfür erforderlichen weiteren Größen wie beispielsweise die chemische Zusammensetzung des Bandes 1, die erste Einlaufdicke di1, die Bandbreite b, die Walzgeschwindigkeit v, ein-und auslaufseitige Züge usw. werden dem Walzkraftmodell 16 ebenfalls zugeführt.

Gemäß FIG 6 sind weiterhin die Schritte S7 und S8 von FIG 3 durch Schritte S13 und S14 ersetzt. Im Schritt S13 werden dem Stellgrößenoptimierer 12 - wie im Schritt S7 von FIG 3 auch - die prognostizierten Temperaturen T' und der angesetzte Stellgrößenverlauf S(t) zugeführt. Zusätzlich werden dem Stellgrößenoptimierer 12 im Schritt S13 die prognostizierten Walzkräfte F zugeführt. Im Schritt S14 prognostiziert der Stellgrößenoptimierer 12 im Rahmen seines Walzgerüstmodells 13 analog zum Schritt S8 von FIG 3 für die im ersten Prognosehorizont PH1 im ersten Walzgerüst 2 zu walzenden Bandabschnitte 6 das jeweilige Walzspaltprofil W. Im Schritt S14 werden bei der Prognostizierung des Walzspaltprofilverlaufs W(t) jedoch zusätzlich die prognostizierten Walzkräfte F berücksichtigt.

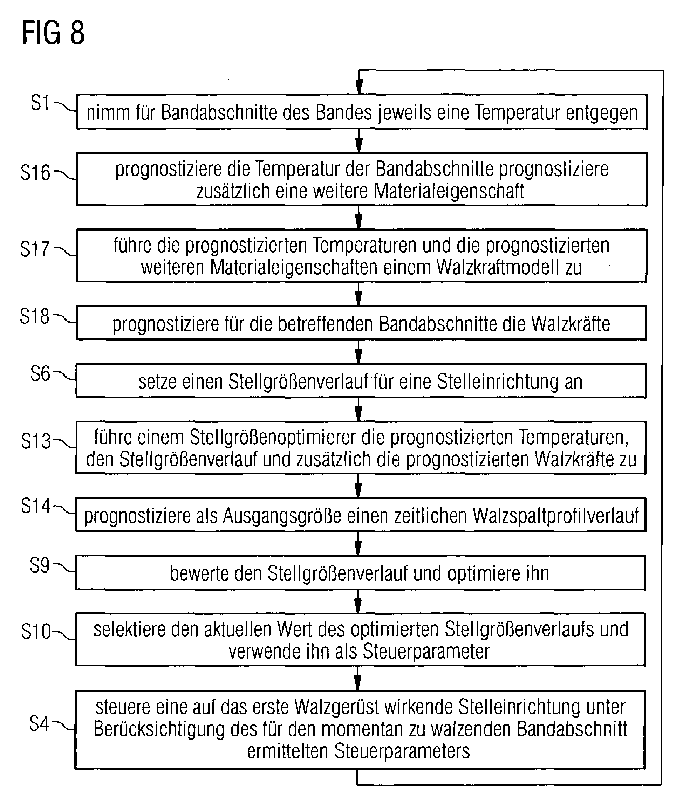

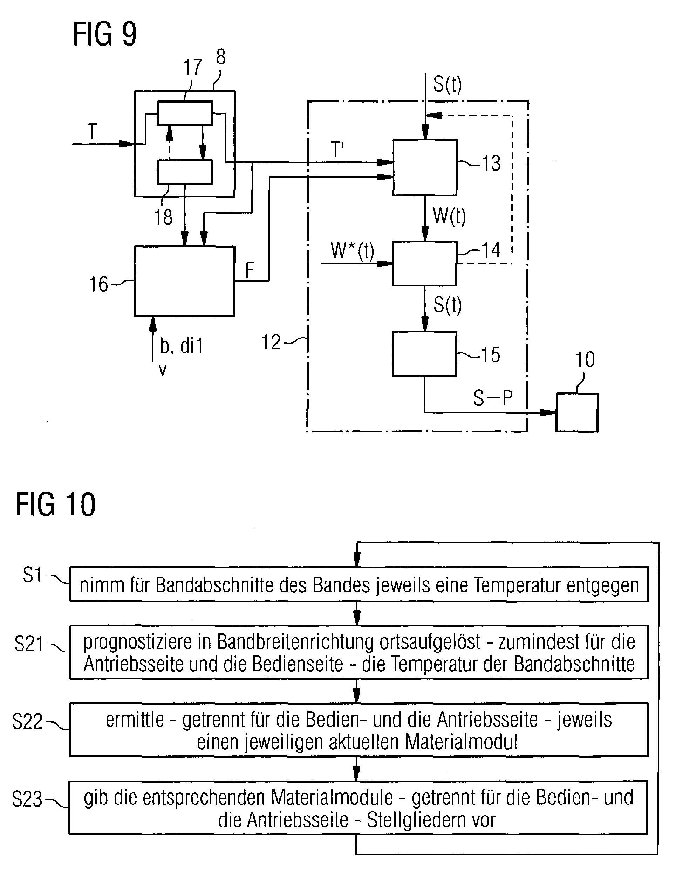

Die Vorgehensweise der FIG 6 und 7 kann durch die Vorgehensweise der FIG 8 und 9 noch weiter verbessert werden.

Gemäß FIG 8 sind die Schritte S2, S11 und S12 von FIG 6 durch Schritte S16 bis S18 ersetzt. Weiterhin weist das Bandmodell 8 gemäß FIG 9 ein Temperaturmodell 17 und ein Materialmodell 18 auf. Mittels des Temperaturmodells 17 werden im Schritt S16 - wie zuvor im Schritt S2 durch das Bandmodell 8 - die Temperaturen T' der Bandabschnitte 6 prognostiziert. Zusätzlich wird im Schritt S16 mittels des Materialmodells 18 eine weitere Materialeigenschaft prognostiziert, die für die jeweiligen, im ersten Prognosehorizont PH1 im ersten Walzgerüst 2 zu walzenden Bandabschnitte 6 während des Walzens des jeweiligen Bandabschnitts 6 im ersten Walzgerüst 2 erwartet wird. Die weitere Materialeigenschaft ist - selbstverständlich - von der Temperatur T' verschieden, hat aber Einfluss auf die zum Walzen des jeweiligen Bandabschnitts 6 erforderliche Walzkraft F. Beispielsweise kann es sich bei der weiteren Materialeigenschaft um einen Phasenumwandlungsgrad, um eine Materialverfestigung, um eine Rekristallisation oder um eine Gefügestruktur handeln.

Gegebenenfalls kann eine uni- oder bidirektionale Kopplung zwischen der Temperaturentwicklung und der Entwicklung der weiteren Materialeigenschaft bestehen. Im erstgenannten Fall wird zunächst mittels des Temperaturmodells 17 der Verlauf der Temperatur des betrachteten Bandabschnitts 6 während des ersten Prognosehorizonts PH1 bestimmt, sodann der ermittelte zeitliche Temperaturverlauf dem Materialmodell 18 vorgegeben und schließlich anhand des Materialmodells 18 die weitere Materialeigenschaft ermittelt. Im letztgenannten Fall erfolgt ein schrittweise gekoppeltes Ermitteln der prognostizierten Temperatur T' und der prognostizierten weiteren Materialeigenschaft des jeweils betrachteten Bandabschnitts 6.

Im Schritt S17 werden dem Walzkraftmodell 16 - zusätzlich zu den im Schritt S11 genannten Werten und Größen - auch die entsprechenden weiteren Materialeigenschaften für die entsprechenden Bandabschnitte 6 zugeführt. Im Schritt S18 prognostiziert das Walzkraftmodell 16 die erforderlichen Walzkräfte F unter zusätzlicher Berücksichtigung auch der weiteren Materialeigenschaften.

Da die weiteren Materialeigenschaften Einfluss auf die prognostizierten Walzkräfte F, diese wiederum auf das Walzspaltprofil W und dieses wiederum auf den optimierten Stellgrößenverlauf S(t) hat, berücksichtigt der Steuerrechner 3 im Ergebnis bei der Vorgehensweise der FIG 8 und 9 auch die prognostizierten weiteren Materialeigenschaften bei der Ermittlung der aktuell an die Stelleinrichtung 10 auszugebenden Stellgröße S, also des entsprechenden Steuerparameters P.

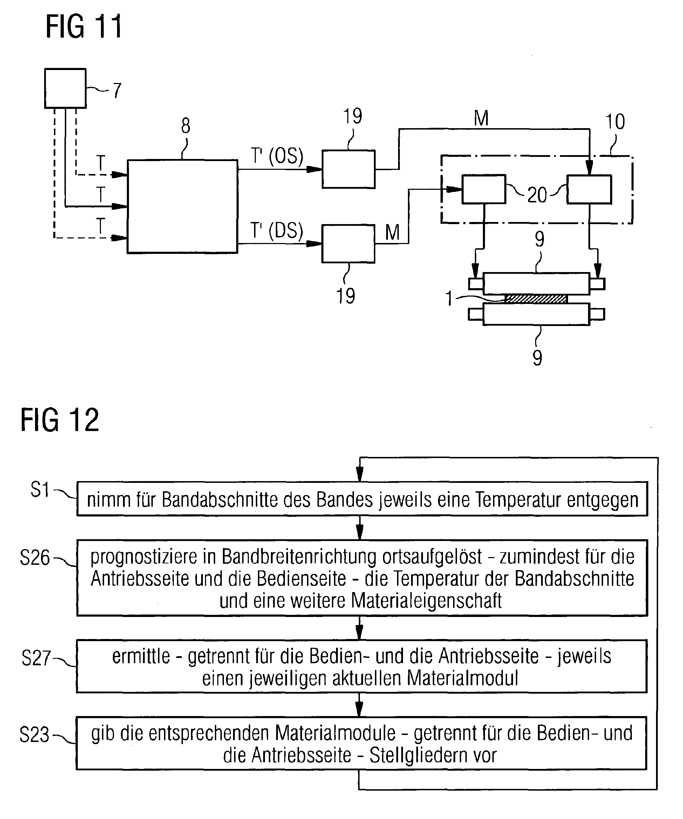

Obenstehend wurde als Beispiel für die Ermittlung eines Steuerparameters P die Ermittlung einer Stellgröße S erläutert, mittels derer das Profil des von den Arbeitswalzen 9 gebildeten Walzspalts beeinflusst wird. Nachfolgend wird in Verbindung mit den FIG 10 und 11 eine weitere Ausgestaltung des erfindungsgemäßen Steuerverfahrens erläutert. Diese Ausgestaltung ist ggf. zusätzlich zu den Ausgestaltungen der FIG 3 bis 9 realisierbar.

FIG 10 ist eine mögliche Ausgestaltung von FIG 2, bei der jedoch die Schritte S2 bis S4 von FIG 4 durch Schritte S21 bis S23 ersetzt sind.

Im Schritt S21 wird - analog zum Schritt S2 - die Temperatur T' des entsprechenden Bandabschnitts 6 prognostiziert. Im Unterschied zum Schritt S2 von FIG 2 ist die prognostizierte Temperatur T' bei der Vorgehensweise gemäß FIG 10 jedoch in Bandbreitenrichtung ortsaufgelöst. Die Ortsauflösung ist derart, dass zumindest für die Antriebsseite (DS = drive side) und die Bedienseite (OS = operator side) jeweils eine eigene Temperatur T' prognostiziert wird.

Der erste Prognosehorizont PH1 kann bei der Ausgestaltung von FIG 10 klein sein. Er kann sogar dem minimalen Prognosehorizont PHmin entsprechen. Alternativ kann der erste Prognosehorizont PH1 größer sein.

Im Schritt S22 wird in Ermittlungsblöcken 19 - getrennt für die Bedien- und die Antriebsseite - unter Verwendung der für die jeweilige Seite des ersten Walzgerüsts 2 für den jeweiligen Bandabschnitt 6 prognostizierten Temperaturen T' ein jeweiliger aktueller Materialmodul M prognostiziert, der für den Zeitpunkt erwartet wird, zu dem der entsprechende Bandabschnitt 6 im ersten Walzgerüst 2 gewalzt wird. Der jeweilige Materialmodul M ist im Wesentlichen für die Festigkeit bzw. Verformbarkeit des entsprechenden Bandabschnitts 6 auf der entsprechenden Seite des ersten Walzgerüsts 2 charakteristisch.

Mittels der Stelleinrichtung 10 ist - und zwar zumindest in Grenzen unabhängig voneinander - jeweils ein Stellglied 20 (beispielsweise eine Hydraulikzylindereinheit) ansteuerbar, mittels derer die Walzkraft F antriebs- und bedienseitig auf die Arbeitswalzen 9 aufbringbar ist und so der Walzspalt beeinflussbar ist. Gemäß den FIG 10 und 11 werden die entsprechenden Materialmodule M im Schritt S23 den Stellgliedern 20 zu dem Zeitpunkt vorgegeben, zu dem der entsprechende Bandabschnitt 6 im ersten Walzgerüst 2 gewalzt wird. Sie werden daher zum entsprechenden Zeitpunkt für die Parametrierung der bedien- und der antriebsseitigen Walzspaltsteuerung herangezogen.

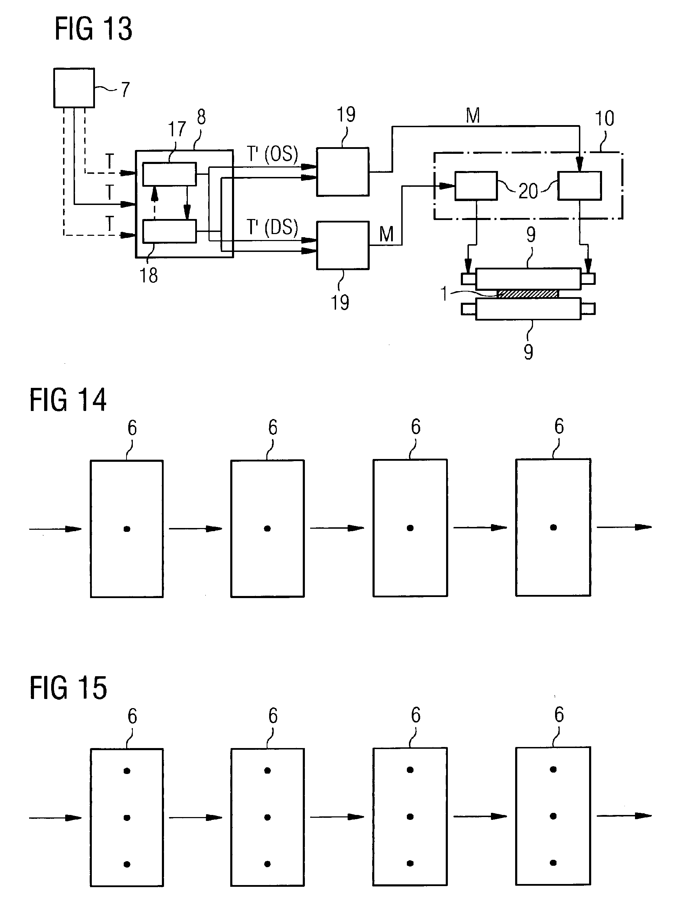

Analog zur Ergänzung der FIG 6 und 7 durch die Ausgestaltung der FIG 8 und 9 kann die Ausgestaltung der FIG 10 und 11 entsprechend den FIG 12 und 13 weiter ausgestaltet werden. Gemäß FIG 12 sind die Schritte S21 und S22 von FIG 10 durch Schritte S26 und S27 ersetzt. Gemäß FIG 13 weist weiterhin das Bandmodell 8 das Temperaturmodell 17 und das Materialmodell 18 auf.

Mittels des Temperaturmodells 17 wird im Schritt S26 - analog zum Schritt S21 von FIG 10 - die bedienseitige und die antriebsseitige Temperatur T' des entsprechenden Bandabschnitts 6 prognostiziert. Im Schritt S26 wird weiterhin - analog zum Schritt S16 von FIG 8 - mittels des Materialmodells 18 eine weitere Materialeigenschaft des entsprechenden Bandabschnitts 6 zum Zeitpunkt des Walzens im ersten Walzgerüst 2 prognostiziert. Die weitere Materialeigenschaft wird jedoch gemäß FIG 13 getrennt für die Antriebsseite und die Bedienseite des ersten Walzgerüsts 2 prognostiziert.

Gemäß FIG 13 wird auch die jeweilige weitere Materialeigenschaft den Ermittlungsblöcken 19 zugeführt. Die Ermittlungsblöcke 19 ermitteln daher den jeweiligen Materialmodul M nicht nur unter Verwendung der jeweiligen prognostizierten Temperaturen T', sondern auch unter Verwendung der jeweiligen prognostizierten weiteren Materialeigenschaften.

Im Rahmen der Vorgehensweise der FIG 3 bis 9 kann es ausreichen, die für die Bandabschnitte 6 prognostizierten Temperaturen T' als Skalare zu ermitteln, also pro Bandabschnitt 6 jeweils nur einen Wert. Dies ist für einen der Bandabschnitte 6 in FIG 14 angedeutet. In FIG 14 ist der Ort des entsprechenden Bandabschnitts 6 für verschiedene Zeitpunkte dargestellt. Dort sind die für den jeweiligen Zeitpunkt prognostizierten Temperaturen T' jeweils durch einen schwarzen Kreis symbolisiert. Im Falle einer skalaren Prognostizierung der Temperatur T' ist es selbstverständlich auch ausreichend, die (erstmalige) Ermittlung der Temperaturen T' innerhalb des entsprechenden Bandabschnitts 6 in Bandbreitenrichtung nicht ortsaufgelöst vorzunehmen. Selbstverständlich ist jedoch auch bei der Vorgehensweise der FIG 3 bis 9 eine ortsaufgelöste Ermittlung der Temperatur T und Prognose der Temperatur T' möglich.

Für die Vorgehensweise der FIG 10 bis 13 hingegen ist es erforderlich, dass mittels des Bandmodells 8 prognostizierte Temperaturen T' (und ggf. auch weitere Materialeigenschaften) der Bandabschnitte 6 in Bandbreitenrichtung ortsaufgelöst sind. In der Regel ist es ausreichend, die Temperatur T' für zwei Stellen (d. h. linke und rechte Bandseite) oder - wie in FIG 15 dargestellt - für drei Stellen (linke und rechte Bandseite und zusätzlich Bandmitte) zu prognostizieren. Es ist jedoch alternativ eine genauere Ortsauflösung möglich.

Gegebenenfalls kann es auch in diesem Fall ausreichend sein, die erstmalige Ermittlung der Temperatur T - also am Anfang des ersten Prognosehorizontes PH1 - in Bandbreitenrichtung nicht ortsaufgelöst vorzunehmen. Dies kann beispielsweise möglich sein, wenn das Band 1 zwar anfänglich eine einheitliche Temperatur T aufweist, aber in Bandbreitenrichtung einen Dickenkeil aufweist und daher auf der dünnen Seite schneller abkühlt als auf der dickeren Seite. In der Regel wird jedoch auch die erstmalige Ermittlung der Temperatur T der Bandabschnitte 6 in diesem Fall entsprechend der gestrichelten Darstellung in den FIG 11 und 13 in Bandbreitenrichtung ortsaufgelöst vorgenommen.

In manchen Fällen ist es ausreichend, wenn die Walzstraße ein einziges Walzgerüst aufweist, also nur das erste Walzgerüst 2 vorhanden ist. Ein einziges Walzgerüst kann insbesondere dann ausreichend sein, wenn ein sehr endabmessungsnahes Gießen des Bandes 1 erfolgt, beispielsweise mittels rotierender Gießwalzen. In vielen Fällen sind jedoch mehrere Walzgerüste vorhanden. Beispielsweise weist eine mehrgerüstige Fertigstraße in der Regel sechs oder sieben Walzgerüste auf.

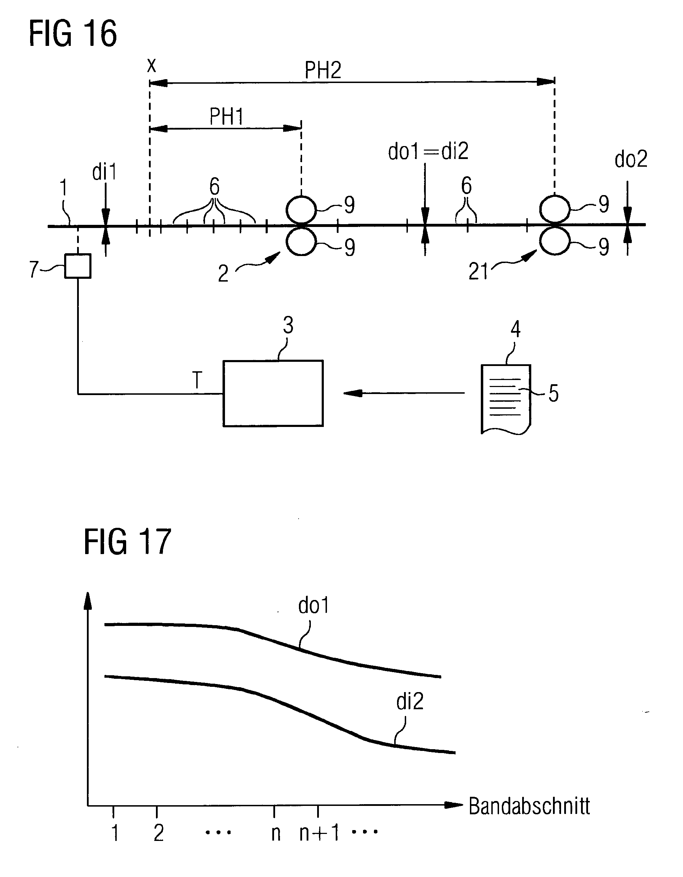

In dem Fall, dass mehrere Walzgerüste vorhanden sind, ist es möglich, das erfindungsgemäße Steuerverfahren gemäß FIG 16 auch für ein zweites Walzgerüst 21 auszuführen. Dies gilt sowohl für die Vorgehensweise der FIG 3 bis 9 als auch für die Vorgehensweise der FIG 10 bis 13 als auch für kombinierte Vorgehensweisen. Ohne Beschränkung der Allgemeinheit kann gemäß FIG 16 weiterhin angenommen werden, dass das zweite Walzgerüst 21 dem ersten Walzgerüst 2 nachgeordnet ist, so dass die Bandabschnitte 6 also zuerst im ersten Walzgerüst 2 und erst danach im zweiten Walzgerüst 21 gewalzt werden. Ebenso kann ohne Beschränkung der Allgemeinheit angenommen werden, dass das Band 1 bzw. die Bandabschnitte 6 in dem ersten Walzgerüst 2 von der ersten Einlaufdicke di1 auf die erste Auslaufdicke do1 und im zweiten Walzgerüst 21 von einer zweiten Einlaufdicke di2 auf eine zweite Auslaufdicke do2 gewalzt werden.

Gemäß der Darstellung von FIG 16 ist das zweite Walzgerüst 21 dem ersten Walzgerüst 2 unmittelbar nachgeordnet. In diesem Fall, bei dem zwischen dem ersten und dem zweiten Walzgerüst 2, 21 kein anderes Walzgerüst angeordnet ist, ist die zweite Einlaufdicke di2 mit der ersten Auslaufdicke do1 identisch. Anderenfalls ist die zweite Einlaufdicke di2 kleiner als die erste Auslaufdicke do1.

Es ist möglich, dass entsprechend der im Stand der Technik üblichen Vorgehensweise für die - gemäß FIG 16 mehrgerüstige - Walzstraße vorab eine Stichplanberechnung vorgenommen wird. In diesem Fall sind die Einlaufdicken di1, di2 und die Auslaufdicken do1, do2 vorab einmalig bestimmt und werden danach konstant - also für alle Bandabschnitte 6 des Bandes 1 - beibehalten. Alternativ ist es möglich, die Stichplanberechnung dynamisch für jeden Bandabschnitt 6 vorzunehmen. In diesem Fall ist es entsprechend FIG 17 möglich, dass die erste Auslaufdicke do1 und/oder die zweite Einlaufdicke di2 bandabschnittspezifisch bestimmt sind. In diesem Fall ist insbesondere eine dynamische Lastumverteilung im laufenden Betrieb der Walzstraße möglich.

Es ist möglich, das erfindungsgemäße Steuerverfahren für das zweite Walzgerüst 21 unabhängig von dem Steuerverfahren für das erste Walzgerüst 2 auszuführen. In diesem Fall kann ein Prognosehorizont PH2 für das zweite Walzgerüst 21 - nachfolgend zweiter Prognosehorizont PH2 genannt - unabhängig vom ersten Prognosehorizont PH1 bestimmt werden. Vorzugsweise ist der zweite Prognosehorizont PH2 jedoch derart bemessen, dass während des zweiten Prognosehorizonts PH2 mehrere Bandabschnitte 6 sowohl im ersten als auch im zweiten Walzgerüst 2, 21 gewalzt werden. Insbesondere kann der zweite Prognosehorizont PH2 gemäß FIG 16 um diejenige Zeitdauer größer sein, die ein Bandabschnitt 6 benötigt, um vom ersten Walzgerüst 2 zum zweiten Walzgerüst 21 zu gelangen. Der erste und der zweite Prognosehorizont PH1, PH2 starten in diesem Fall am gleichen Ort x vor dem ersten Walzgerüst 2.

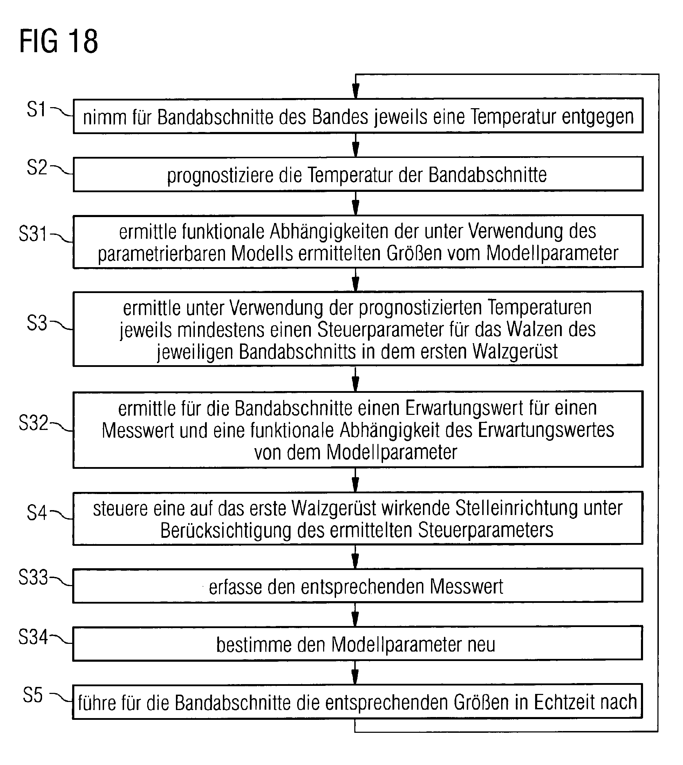

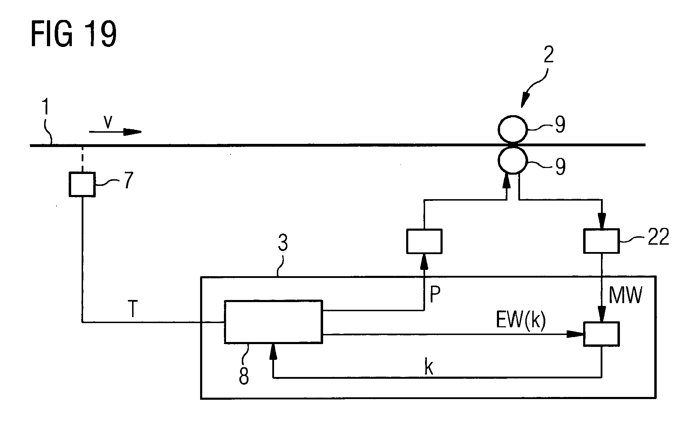

Das bisher erläuterte Steuerverfahren liefert bereits sehr gute Ergebnisse, kann jedoch noch weiter verbessert werden. Dies wird nachfolgend in Verbindung mit den FIG 18 und 19 erläutert.

Gemäß FIG 18 sind - analog zu FIG 2 - die Schritte S1 bis S4 vorhanden. Die Schritte S1 bis S4 können entsprechend den Ausgestaltungen der FIG 3 bis 17 ergänzt und ausgestaltet sein. Zusätzlich sind Schritte S31 bis S35 vorhanden.

Im Rahmen von FIG 18 wird vorausgesetzt, dass (mindestens) eines der zur Ermittlung des mindestens einen Steuerparameters P verwendeten Modelle mittels eines Modellparameters k parametrierbar ist. Rein beispielhaft wird nachfolgend angenommen, dass das Bandmodell 8 mittels des Modellparameters k parametrierbar ist. Dies ist jedoch rein beispielhaft. Alternativ könnte beispielsweise das Walzkraftmodell 16, das Walzgerüstmodell 13 usw. mittels des Modellparameters k parametrierbar sein. Es können auch mehrere Modelle mittels jeweils eines eigenen Modellparameters k parametrierbar sein.

Im Schritt S31 werden gemäß FIG 18 in Echtzeit funktionale Abhängigkeiten der direkt oder indirekt unter Verwendung des parametrierbaren Modells 8 ermittelten Größen vom Modellparameter k ermittelt. Die genannten Größen sind in diesem Zusammenhang diejenigen Größen, die direkt oder indirekt unter Verwendung des parametrierbaren Modells 8 zur Ermittlung des mindestens einen Steuerparameters P benötigt werden. Im Rahmen des Schrittes S31 können beispielsweise funktionale Abhängigkeiten der erforderlichen Walzkräfte F, der sich einstellenden thermischen Balligkeit der Arbeitswalzen 9, der Materialmodule M usw. ermittelt werden. Der Schritt S31 wird, da er zusätzlich zu den Schritten S2 und S3 vorhanden ist, zusätzlich zur Ermittlung der entsprechenden Größen selbst ausgeführt.

Im Schritt S32 wird unter Verwendung der mittels des parametrierbaren Modells 8 ermittelten Größen - also derjenigen Größen, die unter Verwendung des parametrierbaren Modells 8 im Rahmen der FIG 2 bis 17 sowieso ermittelt werden - für die Bandabschnitte 6 in Echtzeit ein Erwartungswert EW für einen Messwert MW ermittelt. Weiterhin wird im Schritt S32 eine funktionale Abhängigkeit des Erwartungswertes EW von dem Modellparameter k ermittelt. Der Erwartungswert EW kann - beispielsweise - die Walzkraft F, mit welcher der entsprechende Bandabschnitt 6 voraussichtlich gewalzt wird, eine Temperatur oder eine Zugverteilung in Band 1 sein.

Im Schritt S33 wird in Echtzeit mittels einer entsprechenden Messeinrichtung 22 für den jeweiligen Bandabschnitt 6 der entsprechende Messwert MW erfasst. Die Messeinrichtung 22 kann - beispielsweise für eine (ggf. in Bandbreitenrichtung ortsaufgelöste) Dicken-, Zug- oder Temperaturerfassung - hinter dem ersten Walzgerüst 2 angeordnet sein. Alternativ kann die Messeinrichtung 22 - beispielsweise für eine (ggf. in Bandbreitenrichtung ortsaufgelöste) Temperatur- oder Zugerfassung - vor dem ersten Walzgerüst 2 angeordnet sein. Wiederum alternativ kann die Messeinrichtung 22 - beispielsweise für eine Walzkraft- oder Anstellungserfassung - am ersten Walzgerüst 2 selbst angeordnet sein.

Im Schritt S34 wird anhand des Messwerts MW, des zugehörigen Erwartungswerts EW und der funktionalen Abhängigkeit des Erwartungswerts EW von dem Modellparameter k der Modellparameter k neu bestimmt, das entsprechende Modell 8 also neu parametriert, das entsprechende Modell 8 also adaptiert. Für Berechnungen, die mittels des parametrierbaren Modells 8 nach dem Adaptieren des parametrierbaren Modells 8 vorgenommen werden, wird der neue, aktualisierte Modellparameter k verwendet.

Im Schritt S35 führt der Steuerrechner 3 für die Bandabschnitte 6, deren Temperaturen T bereits ermittelt und deren erwartete Temperaturen T' und die entsprechenden Steuerparameter P bereits prognostiziert wurden, die entsprechenden Größen in Echtzeit nach. Die Nachführung ist möglich, weil die funktionalen Abhängigkeiten vom Modellparameter k bekannt sind.

Die vorliegende Erfindung weist viele Vorteile auf. Insbesondere ist sie leicht zu implementieren, arbeitet zuverlässig und liefert überlegene Ergebnisse.

Die obige Beschreibung dient ausschließlich der Erläuterung der vorliegenden Erfindung. Der Schutzumfang der vorliegenden Erfindung soll hingegen ausschließlich durch die beigefügten Ansprüche bestimmt sein.

## Patentansprüche

1. Steuerverfahren für eine Walzstraße,
- wobei für Bandabschnitte (6) eines Bandes (1) vor einem ersten Walzgerüst (2) der Walzstraße jeweils eine Temperatur (T) ermittelt wird, welche die Bandabschnitte (6) aufweisen,
- wobei mittels eines Bandmodells (8) anhand der ermittelten Temperaturen (T) die Temperaturen (T') der Bandabschnitte (6) für den Zeitpunkt des Walzens des jeweiligen Bandabschnitts (6) in dem ersten Walzgerüst (1) prognostiziert werden,
- wobei unter Verwendung der prognostizierten Temperaturen (T') der Bandabschnitte (6) mindestens ein jeweiliger Steuerparameter (P) für das Walzen der Bandabschnitte (6) in dem ersten Walzgerüst (2) ermittelt wird,
- wobei eine auf das erste Walzgerüst (2) wirkende Stelleinrichtung (10) während des Walzens des jeweiligen Bandabschnitts (6) unter Berücksichtigung des jeweiligen ermittelten Steuerparameters (P) gesteuert wird,
**dadurch gekennzeichnet,**
- **dass** die Temperaturen (T') der Bandabschnitte (6) für den Zeitpunkt des Walzens des jeweiligen Bandabschnitts (6) in dem ersten Walzgerüst (2) mittels des Bandmodells (8) mit einem ersten Prognosehorizont (PH1) prognostiziert werden,
- **dass** der erste Prognosehorizont (PH1) mit mehreren in dem ersten Walzgerüst (2) zu walzenden Bandabschnitten (6) korrespondiert,
- **dass** für den ersten Prognosehorizont (PH1) ein Stellgrößenverlauf (S(t)) für die Stelleinrichtung (10) angesetzt wird,
- **dass** mittels des Stellgrößenverlaufs (10) ein Profil eines von Arbeitswalzen (9) des ersten Walzgerüsts (2) gebildeten Walzspalts beeinflusst wird,
- **dass** mittels eines Walzgerüstmodells (13) für das erste Walzgerüst (2) unter Verwendung der prognostizierten Temperaturen (T') der Bandabschnitte (6) und des angesetzten Stellgrößenverlaufs (S(t)) für die mit dem ersten Prognosehorizont (PH1) korrespondierenden Bandabschnitte (6) ein jeweiliges Walzspaltprofil (W) prognostiziert wird, das die Arbeitswalzen (9) des ersten Walzgerüsts (2) zum Zeitpunkt des Walzens des jeweiligen Bandabschnitts (6) bilden,
- **dass** der angesetzte Stellgrößenverlauf (S(t)) anhand des für die Bandabschnitte (6) prognostizierten Walzenspaltprofils (W) und eines jeweiligen Sollprofils (W* (t)) optimiert wird und
- **dass** der aktuelle Wert des optimierten Stellgrößenverlaufs (S(t)) dem Steuerparameter (P) entspricht und der Stelleinrichtung (10) als Stellgröße (S) vorgegeben wird.

2. Steuerverfahren nach Anspruch 1,
**dadurch gekennzeichnet,**
- **dass** einem Walzkraftmodell (16) zumindest die prognostizierten Temperaturen (T') zugeführt werden,
- **dass** mittels des Walzkraftmodells (16) unter Verwendung der prognostizierten Temperaturen (T') für die mit dem ersten Prognosehorizont (PH1) korrespondierenden Bandabschnitte (6) die zum Walzen des jeweiligen Bandabschnitts (6) in dem ersten Walzgerüst (2) jeweils erforderliche Walzkraft (F) prognostiziert wird und
- **dass** die Walzspaltprofile (W) mittels des Walzgerüstmodells (13) unter Verwendung der prognostizierten Walzkräfte (F) prognostiziert werden.

3. Steuerverfahren nach Anspruch 1 oder 2,
**dadurch gekennzeichnet,**
**dass** die Stelleinrichtung (10) eine in Bandbreitenrichtung ortsaufgelöst ansteuerbare Walzenkühleinrichtung (11) umfasst.

4. Steuerverfahren nach Anspruch 1, 2 oder 3,
**dadurch gekennzeichnet,**
- **dass** es mit einem zweiten Prognosehorizont (PH2) auch für ein zweites, dem ersten Walzgerüst (2) nachgeordnetes Walzgerüst (21) der Walzstraße ausgeführt wird und
- **dass** die Bandabschnitte (6) in dem ersten Walzgerüst (2) von einer ersten Einlaufdicke (di1) auf eine erste Auslaufdicke (do1) und in dem zweiten Walzgerüst (21) von einer zweiten Einlaufdicke (di2) auf eine zweite Auslaufdicke (do2) gewalzt werden.

5. Steuerverfahren nach Anspruch 4,
**dadurch gekennzeichnet,**
**dass** die erste Auslaufdicke (do1) und/oder die zweite Einlaufdicke (di2) bandabschnittspezifisch bestimmt sind.

6. Steuerverfahren nach Anspruch 4 oder 5,
**dadurch gekennzeichnet,**
**dass** der zweite Prognosehorizont (PH2) derart bemessen ist, dass während des zweiten Prognosehorizonts (PH2) mehrere Bandabschnitte (6) sowohl in dem ersten als auch in dem zweiten Walzgerüst (2, 21) gewalzt werden.

7. Steuerverfahren nach einem der obigen Ansprüche,
**dadurch gekennzeichnet,**
- **dass** für die Bandabschnitte (6) unter Verwendung der prognostizierten Temperaturen (T') für den Zeitpunkt des Walzens des jeweiligen Bandabschnitts (6) in dem ersten Walzgerüst (2) ein jeweiliger aktueller bedienseitiger und ein jeweiliger aktueller antriebsseitiger Materialmodul (M) prognostiziert werden,
- **dass** mittels der Stelleinrichtung (10) bedienseitig und antriebsseitig ein Walzspalt des ersten Walzgerüsts (2) beeinflussbar ist und
- **dass** die Materialmodule (M) den Steuerparametern (P) entsprechen und zum Zeitpunkt des Walzens des jeweiligen Bandabschnitts (6) in dem ersten Walzgerüst (2) für die Parametrierung einer bedienseitigen und einer antriebsseitigen Walzspaltsteuerung (20) herangezogen werden.

8. Steuerverfahren nach einem der obigen Ansprüche,
**dadurch gekennzeichnet,**
- **dass** das Bandmodell (8) ein Materialmodell (18) umfasst, mittels dessen für die in dem ersten Walzgerüst (2) zu walzenden Bandabschnitte (6) für den Zeitpunkt des Walzens des jeweiligen Bandabschnitts (6) in dem ersten Walzgerüst (2) jeweils eine zu erwartende, von der Temperatur (T') verschiedene Materialeigenschaft prognostiziert wird und
- **dass** die prognostizierten Materialeigenschaften bei der Ermittlung des mindestens einen Steuerparameters (P) berücksichtigt werden.

9. Steuerverfahren nach einem der obigen Ansprüche,
**dadurch gekennzeichnet,**
**dass** die mittels des Bandmodells (8) prognostizierten Temperaturen (T') der Bandabschnitte (6) in Bandbreitenrichtung ortsaufgelöst sind.

10. Steuerverfahren nach Anspruch 9,
**dadurch gekennzeichnet,**
**dass** die für die Bandabschnitte (6) ermittelten Temperaturen (T) in Bandbreitenrichtung ortsaufgelöst sind.

11. Steuerverfahren nach einem der obigen Ansprüche,
**dadurch gekennzeichnet,**
- **dass** das Bandmodell (8) und/oder ein anderes, im Rahmen der Ermittlung des mindestens einen Steuerparameters (P) verwendetes Modell (13, 16, 17, 18) mittels eines Modellparameters (k) parametrierbar ist,
- **dass** zusätzlich zu im Rahmen der Ermittlung des mindestens einen Steuerparameters (P) unter Verwendung des parametrierbaren Modells (8) ermittelten Größen in Echtzeit funktionale Abhängigkeiten der ermittelten Größen von dem Modellparameter (k) ermittelt werden,
- **dass** für die Bandabschnitte (6) in Echtzeit unter Verwendung der mittels des parametrierbaren Modells (8) ermittelten Größen ein Erwartungswert (EW) für einen Messwert (MW) und eine funktionale Abhängigkeit des Erwartungswertes (EW) von dem Modellparameter (k) ermittelt werden,
- **dass** für die Bandabschnitte (6) mittels einer vor, an oder hinter dem ersten Walzgerüst (2) angeordneten Messeinrichtung (22) in Echtzeit jeweils der entsprechende Messwert (MW) erfasst wird,
- **dass** anhand des Messwerts (MW), des Erwartungswertes (EW) und der funktionalen Abhängigkeit des Erwartungswertes (EW) von dem Modellparameter (k) der Modellparameter (k) neu bestimmt wird,
- **dass** das parametrierbare Modell (8) anhand des neu bestimmten Modellparameters (k) neu parametriert wird und
- **dass** die für die Bandabschnitte (6) im Rahmen der Ermittlung des mindestens einen Steuerparameters (P) unter Verwendung des parametrierbaren Modells (8) bereits ermittelten Größen in Echtzeit nachgeführt werden.

12. Computerprogramm, das Maschinencode (5) umfasst, der von einem Steuerrechner (3) für eine Walzstraße unmittelbar abarbeitbar ist und dessen Abarbeitung durch den Steuerrechner (3) bewirkt, dass der Steuerrechner (3) ein Steuerverfahren mit allen Schritten eines Steuerverfahrens nach einem der obigen Ansprüche ausführt.

13. Steuerrechner für eine Walzstraße,
**dadurch gekennzeichnet,**
**dass** der Steuerrechner derart programmiert ist, dass er im Betrieb ein Steuerverfahren mit allen Schritten eines Steuerverfahrens nach einem der Ansprüche 1 bis 11 ausführt.

14. Walzstraße zum Walzen eines Bandes (1), die zumindest ein erstes Walzgerüst (2) umfasst,
**dadurch gekennzeichnet,**
**dass** die Walzstraße mit einem Steuerrechner (3) nach Anspruch 13 ausgestattet ist.

## Claims

1. Control method for a rolling mill train,
- wherein for strip sections (6) of a strip (1) upstream of a first roll stand (2) of the rolling mill train a temperature (T) of the strip sections (6) is determined,
- wherein the temperatures (T') of the strip sections (6) for the time of rolling of the respective strip section (6) in the first roll stand (1) are predicted by means of a strip model (8) on the basis of the temperatures (T) determined,
- wherein at least one respective control parameter (P) for rolling of the strip sections (6) in the first roll stand (2) is determined using the predicted temperatures (T') of the strip sections (6),
- wherein an adjusting device (10) acting on the first roll stand (2) is controlled during rolling of the respective strip section (6) taking the respective control parameter (P) determined into account,
**characterised in that**
- the temperatures (T') of the strip sections (6) are predicted using a first prediction horizon (PH1), by means of the strip model (8), for the time of the rolling of the respective strip section (6) in the first roll stand (2),
- the first prediction horizon (PH1) corresponds to a plurality of strip sections (6) that are to be rolled in the first roll stand (2),
- a manipulated variable characteristic (S(t)) for the adjusting device (10) is set for the first prediction horizon (PH1),
- a profile of a roll gap which is formed by work rolls (9) of the first roll stand (2) is influenced by means of the manipulated variable characteristic (10),
- a respective roll gap profile (W), which is formed by the work rolls (9) of the first roll stand (2) at the time when the respective strip section (6) is rolled, is predicted for the first roll stand (2) by means of a roll stand model (13) using the predicted temperatures (T') of the strip sections (6) and the set manipulated variable characteristic (S(t)) for the strip sections (6) corresponding to the first prediction horizon (PH1),
- the set manipulated variable characteristic (S(t)) is optimised on the basis of the roll gap profile (W) that has been predicted for the strip sections (6) and a respective setpoint profile (W* (t)), and
- the current value of the optimised manipulated variable characteristic (S(t)) corresponds to the control parameter (P) and is specified to the adjusting device (10) as a manipulated variable (S).

2. Control method according to claim 1,
**characterised in that**
- at least the predicted temperatures (T') are fed into a rolling force model (16),
- the rolling force (F) required for rolling the respective strip section (6) in the first roll stand (2) is predicted by means of the rolling force model (16) using the predicted temperatures (T') for the strip sections (6) corresponding to the first prediction horizon (PH1), and
- the roll gap profiles (W) are predicted by means of the roll stand model (13) using the predicted rolling forces (F).

3. Control method according to claim 1 or 2,
c h a r a c t e r i s e d in that
the adjusting device (10) comprises a roll cooling device (11) which can be controlled in a spatially resolved manner in the strip width direction.

4. Control method according to claim 1, 2 or 3,
c h a r a c t e r i s e d in that
- it is also carried out for a second roll stand (21) downstream of the first roll stand (2) of the rolling mill train using a second prediction horizon (PH2), and
- the strip sections (6) are rolled from a first entry thickness (di1) to a first exit thickness (do1) in the first roll stand (2) and from a second entry thickness (di2) to a second exit thickness (do2) in the second roll stand (21).

5. Control method according to claim 4,
c h a r a c t e r i s e d in that
the first exit thickness (do1) and/or the second entry thickness (di2) are determined on a strip section specific basis.

6. Control method according to claim 4 or 5,
c h a r a c t e r i s e d in that
the second prediction horizon (PH2) is dimensioned such that during the second prediction horizon (PH2) a plurality of strip sections (6) are rolled both in the first and in the second roll stand (2, 21).

7. Control method according to one of the preceding claims,
c h a r a c t e r i s e d in that
- a respective current operator-side material modulus (M) and a respective current drive-side material modulus (M) are predicted for the strip sections (6), using the predicted temperatures (T') for the time of the rolling of the respective strip section (6) in the first roll stand (2),
- a roll gap of the first roll stand (2) can be influenced on the operator side and drive side by means of the adjusting device (10), and
- the material moduli (M) correspond to the control parameters (P) and are used to parameterise an operator-and drive-side roll gap control system (20) at the time when the respective strip section (6) is rolled in the first roll stand (2).

8. Control method according to one of the preceding claims,
c h a r a c t e r i s e d in that
- the strip model (8) comprises a material model (18) by means of which an expectable material property other then the temperature (T') is predicted for the strip sections (6) to be rolled in the first roll stand (2) for the time of rolling of the respective strip section (6) in the first roll stand (2) and
- the predicted material properties are taken into account in determining the at least one control parameter (P).

9. Control method according to one of the preceding claims,
c h a r a c t e r i s e d in that
the temperatures (T') of the strip sections (6) predicted by means of the strip model (8) are spatially resolved in the strip width direction.

10. Control method according to claim 9,
**characterised in that**
the temperatures (T) determined for the strip sections (6) are spatially resolved in the strip width direction.

11. Control method according to one of the preceding claims,
c h a r a c t e r i s e d in that
- the strip model (8) and/or another model (13, 16, 17, 18) used as part of determining the at least one control parameter (P) can be parameterised by means of a model parameter (k),
- in addition to variables determined as part of determining the at least one control parameter (P) using the parameterisable model (8), functional dependences of the determined variables on the model parameter (k) are determined in real time,
- an expected value (EW) for a measured value (MW) and a functional dependence of the expected value (EW) on the model parameter (k) are determined for the strip sections (6) in real time using the variables determined by means of the parameterisable model (8),
- the corresponding measured value (MW) is acquired for the strip sections (6) in each case in real time by means of a measuring device (22) disposed upstream, on or downstream of the first roll stand (2),
- the model parameter (k) is re-determined on the basis of the measured value (MW), the expected value (EW) and the functional dependence of the expected value (EW) on the model parameter (k),
- the parameterisable model (8) is re-parameterised on the basis of the re-determined model parameter (k), and
- the variables already determined for the strip sections (6) are adjusted in real time as part of determining the at least one control parameter (P) using the parameterisable model (8).

12. Computer program comprising machine code (5) which can be directly executed by a control computer (3) for a rolling mill train and the processing of which by the control computer (3) causes the control computer (3) to carry out a control method having all the steps of a control method according to one of the preceding claims.

13. Control computer for a rolling mill train,
c h a r a c t e r i s e d in that
the control computer is programmed such that it carries out a control method having all the steps of a control method according to one of claims 1 to 11 during ongoing operation.

14. Rolling mill train for rolling a strip (1) and comprising at least one first roll stand (2),
c h a r a c t e r i s e d in that
the rolling mill train is equipped with a control computer (3) according to claim 13.

## Revendications

1. Procédé de commande d'un train de laminoir,
- dans lequel on détermine, pour des tronçons (6) d'un feuillard (1), avant une première cage (2) de laminoir du train de laminoir, respectivement une température (t) qu'ont les tronçons (6) de feuillard,
- dans lequel on pronostique, au moyen d'un modèle (8) de feuillard, à l'aide des températures (t) déterminées, les températures (T') des tronçons (6) de feuillard pendant l'instant du laminage du tronçon (6) de feuillard respectif dans la première cage (1) de laminoir,
- dans lequel, en utilisant les températures (T') pronostiquées des tronçons (6) de feuillard, on détermine au moins un paramètre (P) respectif de commande pour le laminage des tronçons (6) de feuillard dans la première cage (2) de laminoir,
- dans lequel on commande un dispositif (10) de réglage agissant sur la première cage (2) de laminoir pendant le laminage du tronçon (6) respectif de feuillard, en tenant compte du paramètre (P) de commande déterminé respectivement,
**caractérisé**
- **en ce qu'**on pronostique les températures (T') des tronçons (6) de feuillard pendant l'instant de laminage du tronçon (6) respectif de feuillard dans la première cage (2) de laminoir à l'aide du modèle (8) de feuillard avec un premier horizon (PH1) de pronostic,
- **en ce que** le premier horizon (PH1) de pronostic correspond à plusieurs tronçons (6) de feuillard à laminer dans la première cage (2) de laminoir,
- **en ce qu'**on applique une courbe (S(t)) de grandeurs de réglage du dispositif (10) de réglage pour le premier horizon (PH1) de pronostic,
- **en ce que**, à l'aide de la courbe (10) de grandeurs de réglage, on influe sur un profil d'une emprise formée par des cylindres (9) de travail de la première cage (2) de laminoir,
- **en ce que**, à l'aide d'un modèle (13) de cage de laminoir, pour la première cage (2) de laminoir et en utilisant des températures (T') pronostiquées des tronçons (6) de feuillard et la courbe (S(t)) de grandeurs de réglage appliquée pour les tronçons (6) de feuillard correspondants au premier horizon (PH1) de pronostic, on pronostique un profil (W) d'emprise correspondant que les cylindres (9) de travail de la première cage (2) de laminoir forment à l'instant du laminage du tronçon (6) respectif de feuillard,
- **en ce qu'**on optimise la courbe (S(t)) de grandeurs de réglage appliquée à l'aide du profil (W) d'emprise pronostiqué pour les tronçons (6) de feuillard et d'un profil (W*(t)) de consigne respectif et
- **en ce que** la valeur présente de la courbe (S(t)) de grandeurs de réglage optimisée correspond au paramètre (P) de commande et est prescrite comme grandeur (S) de réglage au dispositif (10) de réglage.

2. Procédé de commande suivant la revendication 1,
**caractérisé**
- **en ce qu'**on envoie au moins les températures (T') pronostiquées à un modèle (16) de force de laminage,
- **en ce que**, à l'aide du modèle (16) de force de laminage et en utilisant les températures (T') pronostiquées pour les tronçons (6) de feuillard correspondant au premier horizon (PH1) de pronostic, on pronostique la force (F) de laminage nécessaire respectivement pour laminer le tronçon (6) respectif de feuillard dans la première cage (2) de laminoir et
- **en ce qu'**on pronostique les profils (W) d'emprise à l'aide du modèle (13) de cage de laminoir en utilisant les forces (F) de laminage pronostiquées.

3. Procédé de commande suivant la revendication 1 ou 2,
**caractérisé**
**en ce que** le dispositif (10) de réglage comprend un dispositif (11) de refroidissement des cylindres pouvant être commandé avec résolution locale dans la direction de la largeur du feuillard.

4. Procédé de commande suivant la revendication 1, 2 ou 3,
**caractérisé**
- **en ce qu'**on le réalise, avec un deuxième horizon (PH2) de pronostic, également pour une deuxième cage (21) de laminoir du train de laminoir en aval de la première cage (2) de laminoir et
- **en ce qu'**on lamine les tronçons (6) de feuillard dans la première cage (2) de laminoir d'une première épaisseur (di1) d'entrée à une première épaisseur (do1) de sortie et dans la deuxième cage (21) de laminoir d'une deuxième épaisseur (di2) d'entrée à une deuxième épaisseur (do2) de sortie.

5. Procédé de commande suivant la revendication 4,
**caractérisé**
**en ce qu'**on détermine la première épaisseur (do1) de sortie et/ou la deuxième épaisseur (di2) d'entrée d'une manière spécifique au tronçon de feuillard.

6. Procédé de commande suivant la revendication 4 ou 5,
**caractérisé**
**en ce qu'**on proportionne le deuxième horizon (PH2) de pronostic de manière à laminer, pendant le deuxième horizon (PH2) de pronostic, plusieurs tronçons (6) de feuillard à la fois dans la première et dans la deuxième cages (2, 21) de laminoir.

7. Procédé de commande suivant l'une des revendications précédentes,
**caractérisé**
- **en ce qu'**on pronostique, pour les tronçons (6) de feuillard, en utilisant les températures (T') pronostiquées pour l'instant du laminage du tronçon (6) respectif de feuillard dans la première cage (2) de laminoir, un module (M) de matière présent respectivement du côté de l'opérateur et présent respectivement du côté de l'entraînement,
- **en ce qu'**on peut, au moyen du dispositif (10) de réglage, influencer du côté de l'opérateur et du côté de l'entraînement, une emprise de la première cage (2) de laminoir et
- **en ce que** les modules (M) de matière correspondent aux paramètres (P) de commande et on en tire parti à l'instant du laminage du tronçon (6) respectif de feuillard dans la première cage (2) de laminoir pour le paramétrage d'une commande (20) d'emprise du côté de l'opérateur et du côté de l'entraînement.

8. Procédé de commande suivant l'une des revendications précédentes,
**caractérisé**
- **en ce que** le modèle (8) de feuillard comprend un modèle (18) de matière, au moyen duquel on pronostique, pour les tronçons (6) de feuillard à laminer dans la première cage (2) de laminoir, pour l'instant du laminage du tronçon (6) respectif de feuillard dans la première cage (2) de laminoir, respectivement une propriété de matière escomptée et différente de la température (T') et
- **en ce qu'**on prend en compte les propriétés de matière pronostiquées dans la détermination du au moins un paramètre (P) de commande.

9. Procédé de commande suivant l'une des revendications précédentes,
**caractérisé**
**en ce que** les températures (T'), pronostiquées à l'aide du modèle (8) de feuillard, des tronçons (6) de feuillard sont résolues localement dans la direction de la largeur du feuillard.

10. Procédé de commande suivant la revendication 9,
**caractérisé**
**en ce que** les températures (T), déterminées pour le tronçon (6) de feuillard, sont résolues localement dans la direction de la largeur du feuillard.

11. Procédé de commande suivant l'une des revendications précédentes,
**caractérisé**
- **en ce que** le modèle (8) de feuillard et/ou un autre modèle (13, 16, 17, 18) utilisé dans le cadre de la détermination du au moins un paramètre (P) de commande peut être paramétré à l'aide d'un paramètre (k) de modèle,
- **en ce que**, en plus des grandeurs déterminées dans le cadre de la détermination du au moins un paramètre (P) de commande, en utilisant le modèle (8) paramétrable, on détermine en temps réel des dépendances fonctionnelles des grandeurs déterminées au paramètre (k) de modèle,
- **en ce qu'**on détermine, pour les tronçons (6) de feuillard en temps réel et en utilisant les grandeurs déterminées à l'aide du modèle (8) paramétrable, une valeur (EW) escomptée d'une valeur (MW) de mesure et une dépendance fonctionnelle de la valeur (EW) escomptée au paramètre (k) du modèle,
- **en ce qu'**on détecte, pour les tronçons (6) du feuillard, en temps réel respectivement la valeur (MW) de mesure correspondante à l'aide d'un dispositif (22) de mesure monté avant, sur ou après la première cage (2) de laminoir,
- **en ce que**, à l'aide de la valeur (MW) de mesure de la valeur (EW) escomptée et de la dépendance fonctionnelle de la valeur (EW) escomptée au paramètre (k) de modèle, on détermine à nouveau le paramètre (k) de modèle,
- **en ce qu'**on paramétrise à nouveau le modèle (8) paramétrable à l'aide du paramètre (k) de modèle déterminé à nouveau et
- **en ce qu'**on suit en temps réel les grandeurs déjà déterminées en utilisant le modèle (8) paramétrable pour les tronçons (6) de feuillard dans le cadre de la détermination du au moins un paramètre (P) de commande.

12. Programme d'ordinateur, qui comprend un code machine (5), qui peut être exécuté directement par un ordinateur (3) de commande d'un train de laminoir et dont l'exécution par l'ordinateur (3) de commande fait que l'ordinateur (3) de commande exécute un procédé de commande ayant tous les stades d'un procédé de commande suivant l'une des revendications précédentes.

13. Ordinateur de commande d'un train de laminoir,
**caractérisé**
**en ce que** l'ordinateur de commande est programmé de manière à exécuter en fonctionnement un procédé de commande ayant tous les stades d'un procédé de commande suivant l'une des revendications 1 à 11.

14. Train de laminoir pour laminer un feuillard (1), qui comprend au moins une première cage (2) de laminoir,
**caractérisé**
**en ce que** le train de laminoir est équipé d'un ordinateur (3) de commande suivant la revendication 13.
